# EUROPÄISCHE PATENTSCHRIFT

(11) **EP 4 335 276 B1**
(45) Veröffentlichungstag und Bekanntmachung des Hinweises auf die Patenterteilung: **18.02.2026**
(21) Anmeldenummer: 23401033.8
(22) Anmeldetag: 28.08.2023
(51) Int. Cl.: A01C 19/00, A01C 7/12

(54) **SÄMASCHINE**
SOWING MACHINE
SEMOIR

(30) Priorität: 06.09.2022 DE 102022122548
(43) Veröffentlichungstag der Anmeldung: 13.03.2024
(73) Patentinhaber: Amazonen-Werke H. Dreyer SE & Co. KG, 49205 Hasbergen (DE)
(72) Erfinder: Johannaber, Stefan Jan, 49536 Lienen (DE); Schröder, Olaf, 27798 Hude (DE); Teckemeyer, Stephan, 49504 Lotte (DE); Breuer, Jan Henrik, 48231 Warendorf (DE); Bührke, Johannes, 49170 Hagen a TW (DE)

(56) Entgegenhaltungen:
- EP-A1- 3 918 897
- EP-A1- 3 991 536
- US-A1- 2020 081 457

## Beschreibung

Die Erfindung betrifft eine Sämaschine, welche zum Ausbringen von Saatgut auf einer landwirtschaftlichen Nutzfläche entlang einer Fahrtrichtung bewegbar ist, mit einem Vorratsbehälter zur Aufnahme des Saatguts, mehreren nebeneinander angeordneten Dosiereinheiten, welche jeweils mindestens ein drehbar gelagertes Dosierrad zur Dosierung des Saatguts und eine Dosierwelle zum Antrieb des Dosierrads aufweisen, und einer Antriebswelle zum Antrieb der Dosierwellen.

Die US 2020/081457 A1 offenbart eine Sämaschine mit den Merkmalen des Oberbegriffs des Anspruchs 1.

Solche Sämaschinen weisen in der Regel einen Vorratsbehälter zur Aufnahme des auszubringenden, oftmals körnigen oder granularen Saatguts auf, der zum Transport des Saatguts zur Nutzfläche und/oder zur Bevorratung des Saatguts während der Aussaat häufig nach Art eines großvolumigen, tankartigen Gefäßes ausgeführt ist.

Unter dem Begriff "Saatgut" sollen in diesem Zusammenhang alle in der Landwirtschaft einsetzbaren körnigen oder granularen Materialien zusammengefasst werden, insbesondere auch Dünger usw. Als "Aussaat" soll nachfolgend das Ausbringen sämtlicher derartiger Materialien auf Nutzflächen bezeichnet werden.

Zur Aussaat des Saatguts werden entsprechende Sämaschinen in der Regel rasterartig entlang einer Fahrtrichtung über die Nutzfläche gefahren, indem diese beispielsweise von einer landwirtschaftlichen Zugmaschine gezogen werden.

Um eine gleichmäßige Dosierung des Saatguts während des Ausbringens und damit ein gleichmäßiges Saatbild entlang der Fahrtrichtung zu ermöglichen, weisen solche Sämaschinen in der Regel mehrere nebeneinander angeordnete Dosiereinheiten zur Dosierung des Saatguts auf, welche dem Vorratsbehälter entlang des Saatgutstroms nachgeschaltet sind. Die Dosierung des Saatguts in der jeweiligen Dosiereinheit erfolgt in der Regel mittels mindestens eines drehbar gelagerten Dosierrads. Ein solches Dosierrad weist oftmals über dessen Umfang verteilte Dosierkammern zur Mitnahme des aus dem Vorratsbehälter stammenden Saatguts auf, wobei die zu dosierende Menge des Saatguts über die Drehgeschwindigkeit des Dosierrads einstellbar ist. Zur flächigen Aussaat dosiert jede der nebeneinander angeordneten Dosiereinheiten das Saatgut, welches in eine der sich in Fahrtrichtung der Sämaschine parallel zueinander erstreckenden Saatreihen ausgesät werden kann.

Bei solchen Sämaschinen sind in der Regel mehrere Dosierräder auf einer gemeinsamen Drehachse angeordnet und bilden auf diese Art eine Dosierwalze, die über einen zentralen Dosierantrieb angetrieben wird. Solche Maschinen haben sich grundsätzlich bewährt. Allerdings kann es in der Praxis zur Erzeugung einer im späteren Pflanzenbestand nutzbaren Fahrgasse oder zur Vermeidung einer doppelten Aussaat erforderlich sein, bestimmte Dosiereinheiten während der Aussaat einzeln oder gruppenweise abzuschalten. Dies ist bei einer Sämaschine, bei welcher die Dosierräder auf einer gemeinsamen Drehachse angeordnet und gemeinschaftlich angetrieben werden, nicht ohne Weiteres möglich. Zwar können durch Abschalten des Dosierantriebs alle auf der gemeinsamen Drehachse angeordneten Dosierräder einer Dosierwalze abgeschaltet werden, wodurch die Dosierung in allen entsprechenden Dosiereinheiten gestoppt und die Aussaat unterbrochen werden kann. Ein gezieltes Abschalten einzelner Dosiereinheiten ist jedoch nicht möglich.

Vor diesem Hintergrund ist es aus der EP 3 918 897 A1 bekannt, dass Dosiereinheiten eigene Dosierwellen zum Antrieb des Dosierrads aufweisen. Angetrieben werden die Dosierwellen der einzelnen Dosiereinheiten über eine Antriebswelle des Sämaschine, über welche sämtlich Dosierräder von einem zentralen Antrieb angetrieben werden können. Die Antriebswelle ist in Fahrtrichtung hinter den Dosierrädern angeordnet, so dass sie in der an die Zugmaschine angekoppelten Betriebsstellung der Sämaschine von außen zugänglich ist. Die Dosierwellen können von der Antriebswelle abgekoppelt werden, so dass Dosiereinheiten während der Aussaat einzeln oder gruppenweise abgeschaltet werden können.

Da das sich drehende Dosierrad während des Dosierens auf einer Seite der Dosiereinheit Saatgut aufnimmt, es entlang seiner Drehrichtung mitführt und in dosierter Form auf der anderen Seite der Dosiereinheit abgibt, übt das Saatgut beim Durchqueren des Bereichs unterhalb des Dosierrads eine Kraft auf dieses sowie die Dosierwelle aus. Der Antrieb des Dosierrads erfolgt über die Antriebswelle, welche ein das Dosierrad antreibendes Drehmoment auf die Dosierwelle und die Dosierräder überträgt. Bei dieser Drehmomentübertragung wird von der Antriebswelle eine Kraft auf die Dosierwelle ausgeübt. Da die Drehrichtungen der Dosierwelle und der Antriebswelle aufgrund der direkten Kopplung beider Wellen miteinander entgegengesetzt verlaufen, weist diese Kraft eine von Null verschiedene Komponente parallel zu jener Kraft auf, welche vom Saatgut auf die Dosierwelle ausgeübt wird. Die von der Antriebswelle auf die Dosierwelle ausgeübte Kraft überlagert sich bei solchen bekannten Anordnungen daher konstruktiv mit der vom Saatgut auf die Dosierwelle ausgeübten Kraft, so dass eine höhere Gesamtkraft auf die Dosierwelle ausgeübt wird.

Die Dosierwellen sowie die Dosiereinheiten werden aufgrund der höheren Gesamtkraft stärker beansprucht, so dass es zu einem gesteigerten Verschleiß kommt. Insbesondere bei lösbar in der Dosiereinheit gelagerten Dosierwellen kann diese Gesamtkraft zu einem Herausspringen der Dosierwellen führen. In diesem Fall muss die Aussaat unterbrochen, eine Fehlersuche durchgeführt und dieser Fehler durch einen manuellen Eingriff behoben werden, bevor die Aussaat fortgeführt werden kann. Dies ist folglich mit erheblichen Unterbrechungen und einem gesteigerten Aufwand verbunden.

Daher stellt sich die vorliegende Erfindung die **Aufgabe**, eine Sämaschine anzugeben, bei welcher der Verschleiß und das Auftreten von Unterbrechungen währen der Aussaat reduziert werden.

Diese Aufgabe wird bei einer Maschine der eingangs genannten Art durch die Merkmale des Patentanspruchs 1 **gelöst**. Vorteilhafte Weiterbildungen sind in den abhängigen Unteransprüchen angegeben.

Die Anordnung der Antriebswelle in Fahrtrichtung vor den Dosierrädern erlaubt es die Richtung der Kraft bei der Drehmomentübertragung von der Antriebswelle auf die einzelnen Dosierwellen und Dosierräder der Dosiereinheiten zu invertieren, ohne die Drehrichtung der Dosierräder zu verändern. Auf diese Weise kann sich die von der Antriebswelle auf die Dosierwelle ausgeübte Kraft destruktiv mit der vom Saatgut auf die Dosierwelle ausgeübten Kraft überlagern, so dass eine geringere Gesamtkraft auf die Dosierwelle ausgeübt wird. Der Verschleiß der Dosierwelle wird verringert. Insbesondere bei lösbar in der Dosiereinheit gelagerten Dosierwellen kann die Wahrscheinlichkeit eines Herausspringens der Dosierwellen vermindert werden.

Bevorzugt ist die Antriebswelle oberhalb der Dosierwellen angeordnet. Durch die Anordnung oberhalb der Dosierwellen kann die Antriebswelle während der Aussaat besser vor äußeren Einflüssen geschützt sein.

Gemäß einer konstruktiven Ausgestaltung der Erfindung erstreckt sich die Antriebswelle quer zur Fahrtrichtung. Auf diese Weise kann die Antriebswelle zum Antrieb sämtlicher quer zur Fahrtrichtung nebeneinander angeordneten Dosierwellen genutzt werden.

In vorteilhafter Weise weist die Sämaschine mehrere von den Dosiereinheiten mit Saatgut versorgbare Säeinheiten zur Aussaat des Saatguts auf. Über die einzelnen Säeinheiten kann das Saatgut zur Erzeugung einer sich in Fahrtrichtung erstreckenden Saatreihe auf der Nutzfläche ausgebracht werden. Die auszubringende Menge des Saatguts wird den Säeinheiten durch die einzelnen Dosiereinheiten zur Verfügung gestellt. Zur flächigen Aussaat können zahlreiche Säeinheiten parallel zueinander angeordnet sein, mit welchen das Saatgut in zahlreichen, sich in Fahrtrichtung der Maschine parallel zueinander erstreckenden Saatreihen ausgesät werden kann. Vorzugsweise ist jeder Dosiereinheit eine Säeinheit zugeordnet.

In vorteilhafter Weise sind die mehreren nebeneinander angeordneten Dosiereinheiten baugleich. Neben den nebeneinander angeordneten Dosiereinheiten, welche jeweils mindestens ein drehbar gelagertes Dosierrad und eine Dosierwelle zum Antrieb des Dosierrads aufweisen, kann die Sämaschine weitere Dosiereinheiten aufweisen, welche sich von diesen mehreren nebeneinander angeordneten Dosiereinheiten baulich unterscheiden und insbesondere auf andere Art und Weise angetrieben sein können.

Gemäß einer konstruktiven Ausgestaltung wird vorgeschlagen, dass jede der mehreren nebeneinander angeordneten Dosiereinheiten ein Antriebselement zum Antrieb der Dosierwellen aufweist. Über das ein Teil der Dosiereinheit darstellende Antriebselement kann die Drehmomentübertragung von der Antriebswelle auf die Dosierwelle erfolgen.

In diesem Zusammenhang hat es sich als vorteilhaft erwiesen, wenn die Antriebselemente mit der Antriebswelle koppelbar sind. Über die mit der Antriebswelle koppelbaren Antriebselemente können die den Antriebselementen jeweils zugeordneten Dosierwellen wahlweise mit der Antriebswelle gekoppelt oder von dieser abgekoppelt werden. Die mit der Antriebswelle koppelbaren Antriebselemente können ein wahlweises An- und Abschalten einzelner Dosiereinheiten ermöglichen.

In einer vorteilhaften Ausgestaltung weist jede Dosiereinheit der Sämaschine eine eigene Dosierwelle auf. Auf Dosiereinheiten, welche gemeinschaftlich eine einzelne Dosierwelle zum Antrieb ihrer Dosierräder nutzen, kann auf diese Weise verzichtet werden. Jede einzelne Dosiereinheit der Sämaschine kann auf diese Weise individuell angetrieben, insbesondere einzeln an- und abgeschaltet, werden. Insbesondere können sämtliche Dosiereinheiten der Sämaschine baugleich ausgestaltet sein, wodurch der Bedarf an unterschiedlichen Bauteilen reduziert werden kann.

Bevorzugt sind die Dosierräder der Dosiereinheiten unabhängig von den Dosierrädern der anderen Dosiereinheiten gelagert. Eine gegenseitige Beeinflussung der Dosierräder unterschiedlicher Dosiereinheiten untereinander kann auf diese Weise vermieden werden. Gleichwohl kann eine Dosiereinheit mehrere Dosierräder aufweisen, welche gemeinschaftlich gelagert, insbesondere von der gleichen Dosierwelle angetrieben, werden können.

Erfindungsgemäß ist die Antriebswelle den Vorratsbehälter durchstoßend, insbesondere teilweise im mit Saatgut füllbaren Saatgutreservoir des Vorratsbehälters, angeordnet. Eine den Vorratsbehälter durchstoßende Anordnung der Antriebswelle, bei welcher die Antriebswelle von außen in den Vorratsbehälter eintritt und an anderer Stelle aus dem Vorratsbehälter wieder austritt, ermöglicht es auf einfache Art und Weise die Antriebswelle in Fahrtrichtung vor den Dosierrädern anzuordnen. Hierüber hinaus kann die den Vorratsbehälter durchstoßende Antriebswelle innerhalb des Vorratsbehälters zusätzlich für weitere Funktionen während oder im Zusammenhang mit der Aussaat genutzt werden. Die Antriebswelle kann auf diese Weise eine multifunktionale Rolle einnehmen. Eine teilweise in dem mit Saatgut füllbaren Saatgutreservoir des Vorratsbehälters angeordnete Antriebswelle kann zudem eine unmittelbare Beeinflussung des Saatguts durch die Antriebswelle ermöglichen, da eine derart angeordnete Antriebswelle gegenüber dem im Saatgutreservoir aufnehmbaren Saatgut nicht abgeschirmt wäre.

Weiter vorteilhaft ist es, wenn die Antriebswelle, insbesondere außerhalb des Vorratsbehälters angeordnete, Antriebsbereiche zum Antrieb der Dosierwellen und, insbesondere im Vorratsbehälter angeordnete, Rührbereiche zum Durchrühren des Saatguts aufweist. Durch die Unterteilung der Antriebswelle in Antriebsbereiche und Rührbereiche können die Antriebsfunktion und die Rührfunktion einer multifunktionalen Antriebswelle räumlich voneinander getrennt werden. Die Antriebsbereiche der Antriebswelle können dabei zum Antrieb der Dosierwellen und damit der einzelnen Dosierräder genutzt werden. Die Rührbereiche hingegen können zum Durchrühren des Saatguts genutzt werden, wodurch ein Verklumpen während dem Ausbringen des Saatguts verhindert und eine gleichmäßige Aussaat ermöglicht werden kann. Durch die räumliche Trennung des Antriebsbereichs vom Rührbereich kann verhindert werden, dass mit dem Rührbereich in Kontakt stehendes Saatgut in den Antriebsbereich gelangt und dort den Antrieb einer Dosiereinheit negativ beeinflusst. In gleicher Weise kann durch eine bauliche Trennung der Antriebsbereiche und der Rührbereiche verhindert werden, dass Verunreinigungen, wie beispielsweise Schmierstoffe, aus dem Antriebsbereich in den Rührbereich und somit in das Saatgutreservoir gelangen.

In diesem Zusammenhang ist es besonders vorteilhaft, wenn die Antriebsbereiche und die Rührbereiche alternierend entlang der Antriebswelle angeordnet sind. Durch die alternierende Anordnung der Antriebsbereiche und der Rührbereiche kann die Antriebswelle an mehreren Stellen entlang des Vorratsbehälters sowohl zum Antrieb der Dosierräder als auch zum Durchrühren des Saatguts genutzt werden. Diesbezüglich hat es sich zudem als vorteilhaft erwiesen, wenn jedem Antriebsbereich eine Dosiereinheit zugeordnet ist. Im Übergang vom Antriebsbereich zum Rührbereich kann die Antriebswelle den Vorratsbehälter von außen und im Übergang vom Rührbereich zum Antriebsbereich von innen durchstoßen.

Gemäß einer konstruktiven Ausgestaltung wird vorgeschlagen, dass die Antriebswelle in den Rührbereichen angeordnete Rührelemente zum Durchrühren des Saatguts aufweist. Mit den Rührelementen kann die Antriebswelle das Saatgut effektiver durchrühren. Die Rührelemente können sich in radialer Richtung von der Antriebswelle wegerstrecken und weiter in das Saatgutreservoir des Vorratsbehälters erstrecken. Die drehfest an der Antriebswelle angeordneten Rührelemente können auf diese Weise die Wechselwirkung mit dem Saatgut erhöhen und somit zu einem besseren Durchrühren des Saatguts beitragen. Verklumpungen und Aneinanderhaftungen des Saatguts können auf diese Weise gelöst und ein neues Verklumpen verhindert werden.

Eine weitere Ausgestaltung sieht vor, dass der Vorratsbehälter, insbesondere dachförmige, Abdeckelemente zur Abdeckung der Antriebsbereiche, insbesondere zum Schutz von Koppelelementen der Antriebswelle vor dem Saatgut, aufweist. Die Abdeckelemente des Vorratsbehälters können verhindern, dass Saatgut von oben in Kontakt mit den Antriebsbereichen der Antriebswelle gelangt. Insbesondere Koppelelemente der Antriebswelle lassen sich auf diese Weise vor dem Saatgut und Beeinträchtigungen durch dieses schützen. Neben den insbesondere dachförmigen Abdeckelementen kann der Vorratsbehälter quer zur Antriebswelle erstreckende, wandartige Einhausungen aufweisen. Diese Einhausungen können an die Abdeckelemente anschließen und sich insbesondere zwischen gegenüberliegenden Seitenflächen des Vorratsbehälters erstrecken. Die Antriebsbereiche der Antriebswelle können durch die Abdeckelemente zusammen mit den Einhausungen baulich vom Inneren des Vorratsbehälters, insbesondere vom Saatgutreservoir, getrennt werden.

Weiter vorteilhaft ist es, wenn das Saatgut durch benachbarte, insbesondere quer zur Fahrtrichtung, trichterförmig zusammenwirkende Abdeckelemente in Richtung der Rührbereiche führbar ist. Zwei benachbarte und trichterförmig zusammenwirkende Abdeckelemente können auf diese Weise Saatgut von den sich oberhalb der Antriebsbereiche befindlichen Bereichen im Saatgutreservoir hin zu den Rührbereichen der Antriebswelle führen, in welchen das Saatgut durchrührt werden kann. Benachbarte zusammenwirkende Abdeckelemente können dabei derart ausgestaltet sein, dass sie nur quer zur Fahrtrichtung trichterförmig zusammenwirken, während sie entlang der Fahrtrichtung nicht trichterförmig wirken. Dachförmige Abdeckelemente können gleichzeitig mit ihren relativ zur Fahrtrichtung links und rechts benachbarten Abdeckelementen trichterförmig zusammenwirken, wodurch sich eine gleichmäßigere Verteilung des Saatguts ergeben kann.

Gemäß einem weiteren Ausführungsbeispiel der Erfindung weist die Antriebswelle, insbesondere in den Antriebsbereichen angeordnete, Koppelelemente zur kraftschlüssigen Kopplung der Antriebswelle mit den Dosierwellen auf. Insbesondere kann jedem Koppelelement der Antriebswelle eine Dosierwelle zugeordnet sein. Zur kraftschlüssigen Kopplung der Antriebswelle mit den Dosierwellen können die Koppelelemente mit den Antriebselementen der Dosierwelle zusammenwirken. Die Koppelelemente und/oder die Antriebselemente können als ineinandergreifende Zahnräder ausgestaltet sein.

In diesem Zusammenhang hat es sich als vorteilhaft erwiesen, wenn die Koppelelemente außerhalb des Vorratsbehälters, insbesondere außerhalb des mit Saatgut füllbaren Saatgutreservoirs, angeordnet sind. Indem die Koppelelemente außerhalb des Vorratsbehälters, insbesondere außerhalb des Saatgutreservoirs, angeordnet sind, kann auf einfache Art und Weise ein Blockieren der Koppelelemente Saatgut verhindert werden. Durch die Anordnung der Koppelelemente außerhalb des Vorratsbehälters können diese auf konstruktiv einfache Weise mit den Antriebselementen der Dosierwellen zusammenwirken.

In einer vorteilhaften Ausgestaltung sind den Koppelelementen Kupplungen, insbesondere jedem Koppelelement eine Kupplung, zur wahlweisen Entkopplung der einem Koppelelement zugeordneten Dosierwellen von der Antriebswelle zugeordnet. Über die Kupplung kann die dem Koppelelement zugeordnete Dosierwelle antriebsfrei und somit die entsprechende Dosiereinheit abgeschaltet werden. Die Kupplung kann derart ausgestaltet sein, dass das ansonsten drehfest mit der Antriebswelle verbundene Koppelelement durch Betätigung der Kupplung frei drehend an der Antriebswelle angeordnet ist. Bei betätigter Kupplung kann auf diese Weise eine Drehmomentübertragung von der Antriebswelle über das Koppelelement auf die Dosierwelle verhindert werden. Die Dosierwelle und die gesamte ihr zugeordnete Dosiereinheit wird bei betätigter Kupplung auf diese Weise nicht angetrieben. Der Kraftschluss zwischen dem Koppelelement und der ihr zugeordneten Dosierwelle kann trotz dieser Entkopplung der Dosierwelle von der Antriebswelle weiterhin bestehen.

Vorzugsweise ist die Kupplung als Bestandteil des Koppelelements ausgestaltet, welchem die Kupplung zugeordnet ist. Die als Bestandteil des Koppelelements ausgestaltete Kupplung kann auf montagetechnisch einfache Art und Weise zusammen mit dem Koppelelement verbaut werden. Insbesondere kann die Kupplung einstückig mit dem Koppelelement ausgestaltet sein.

In einer weiteren Ausführungsform der Erfindung weist die Sämaschine eine Schaltwelle zur wahlweisen Antriebsfreischaltung einzelner Dosierwellen, insbesondere zur Betätigung der Kupplungen, auf. Mit der Schaltwelle können einzelne Dosierwellen zentral gesteuert antriebsfrei geschaltet werden, wobei diese Antriebsfreischaltung insbesondere über die Betätigung einer Kupplung erfolgen kann, welche der Dosierwelle und/oder einem der Dosierwelle zugeordneten Koppelelement zugeordnet sein kann.

In diesem Zusammenhang hat es sich als vorteilhaft erwiesen, wenn die Schaltwelle mindestens ein Schaltrad, insbesondere mehrere Schalträder, aufweist, welche eine drehpositionsabhängige Antriebsfreischaltung einer dem Schaltrad zugeordneten Dosierwelle ermöglicht. Über die Schaltwelle kann das Schaltrad in unterschiedliche Drehpositionen überführt werden. Abhängig von der Drehposition kann das Schaltrad eine Antriebsfreischaltung der Dosierwelle bewirken oder die Dosierwelle angetrieben lassen. Insbesondere mit mehreren Schalträdern, welchen jeweils eine Dosierwelle zugeordnet ist, können einzelne oder Gruppen von Dosierwellen antriebsfrei geschaltet werden oder die Antriebsfreischaltung einzelner oder mehrerer Dosierwellen aufgehoben werden. Durch die Drehposition der Schaltwelle und damit die Drehposition der Schalträder kann das Saatbild zentral eingestellt werden, um beispielsweise mehrere Dosiereinheiten zur Bildung einer Fahrgasse abzuschalten, diese jedoch bei der Fahrt über einen anderen Bereich der Nutzfläche über die Schaltwelle wieder zentral anschalten zu können, ohne dass ein individueller, händischer Eingriff zum Schalten an den einzelnen Dosiereinheiten erforderlich wäre. Die Schaltwelle und damit die Schalträder können durch eine zentrale händische Betätigung oder motorgestützt angetrieben werden.

In diesem Zusammenhang hat es sich als vorteilhaft erwiesen, wenn jeder Dosierwelle ein Schaltrad zugeordnet ist. Auf diese Weise können sämtliche Dosierwellen individuell über die Schaltwelle antriebsfrei geschaltet werden. Eine Beschränkung auf wenige einzelne antriebsfreischaltbare Dosierwellen, welche beispielsweise einzig der Fahrgassenbildung gewidmet sind, kann vermieden und die Einsatzflexibilität der Sämaschine erhöht werden.

Vorzugsweise ist das Schaltrad als Nockenrad, insbesondere mit mehreren wahlweise mit einem Nocken bestückbaren Schaltpositionen, ausgestaltet. Die Ausgestaltung des Schaltrads als Nockenrad ermöglicht es auf einfache Art und Weise, abhängig von der Drehposition des Schaltrads eine Antriebsfreischaltung der dem Schaltrad zugeordneten Dosierwelle zu ermöglichen. Ein Schaltrad mit mehreren Schaltpositionen, welche wahlweise mit einem Nocken bestückbar sind, gestattet eine Wahl der Drehposition, bei welcher das Schaltrad die Antriebsfreischaltung der zugeordneten Dosierwelle ermöglicht. Das Schaltrad mit mehreren wahlweise mit einem Nocken bestückbaren Schaltpositionen kann auf diese Weise nach Art einer mechanischen Programmierung vor dem Ausbringen des Saatguts an die gewünschten Saatbilder angepasst werden, zwischen denen während des Ausbringens ausgewählt werden soll. Beispielsweise können jene Schalträder, deren zugeordnete Dosiereinheiten zur Bildung einer Fahrgasse in einem Betriebszustand ausgeschaltet werden sollen, jeweils in der gleichen Schaltposition einen Nocken aufweisen, so dass in einer Drehposition der Schaltwellen sämtliche dieser Schalträder über ihre Nocken die Dosierwellen der entsprechenden Dosiereinheiten zur Bildung der Fahrgasse freigeschalten. In einer anderen und nicht mit Nocken bestückten Schaltposition würden die Dosierwellen durch die ihnen zugeordneten Schalträder hingegen nicht antriebsfrei geschaltet werden, so dass diese Dosiereinheiten dann keine Fahrgasse bilden. Durch eine einfache Veränderung der Drehposition der Schaltwelle und damit der Schalträder kann auf diese Weise zwischen einem Betrieb mit Erzeugung einer Fahrgasse und einem Betrieb ohne Erzeugung einer Fahrgasse zentral hin- und hergeschaltet werden. Dies kann insbesondere von Vorteil sein, wenn der Abstand zwischen benachbarten Fahrgassen größer als die Breite der Sämaschine sein soll. Die Bestückbarkeit der Schaltpositionen der Schalträder mit einem Nocken gestattet es beispielsweise auch für unterschiedliche Aussaatvorgänge, unterschiedliche Dosiereinheiten zur Bildung einer Fahrgasse zu nutzen. Durch die entsprechende Wahl der mit einem Nocken bestückten oder unbestückten Schaltpositionen der einzelnen Schalträder der Sämaschine können darüber hinaus in anderen Drehpositionen auch größere Gruppen von Dosiereinheiten abgeschaltet werden, so dass beispielsweise nur die Säeinheiten auf der linken oder rechten Seite der Sämaschine oder jede zweite Dosiereinheit alternierend betrieben wird.

In einer konstruktiven Ausgestaltung weist die Sämaschine Betätigungsmittel auf, welche von der Schaltwelle, insbesondere von den Schalträdern, zur Betätigung der Kupplungen ansteuerbar sind. Über die Betätigungsmittel kann die Schaltwelle, insbesondere die einzelnen Schalträder, abhängig von ihrer Drehposition auf die Kupplung einwirken. Das Betätigungsmittel als zwischen der Schaltwelle oder einem Schaltrad auf der einen und der Kupplung auf der anderen Seite vermittelndes Element gestattet eine von der Antriebswelle beabstandete Anordnung der Schaltwelle. Durch diese beabstandete Anordnung können Reinigungs-, Wartungs- und Reparaturarbeiten erleichtert werden. Vorzugsweise ist jedem Schaltrad ein Betätigungsmittel zugeordnet.

In diesem Zusammenhang hat es sich als vorteilhaft erwiesen, wenn die Betätigungsmittel mit den Kupplungen verrastbare Rastnasen zur Betätigung der Kupplungen aufweisen. Das von der Schaltwelle und insbesondere einem Schaltrad angesteuerte Betätigungsmittel kann mit seiner Rastnase mit der Kupplung, insbesondere einem Nocken der Kupplung, verrasten. Führt die Antriebswelle während dieser bestehenden Verrastung eine Rotation aus, so kann die mit dem Betätigungsmittel verrastete Kupplung auslösen und die dieser Kupplung zugeordnete Dosierwelle antriebsfrei schalten. Um das Betätigungsmittel in diese mit der Kupplung verrastete Position zu überführen, kann der Nocken des Schaltrads mit einem Ansteuervorsprung des Betätigungsmittels zusammenwirken und das elastische Betätigungsmittel auf diese Weise in dessen Raststellung drücken. Wird das Schaltrad in eine Drehposition überführt, in welcher kein Nocken auf den Ansteuervorsprung wirkt, kann sich das Betätigungsmittel entspannen, so dass sich die Rastnase von der Kupplung wegbewegt und nicht mehr mit dieser verrastet. Die Antriebswelle könnte dann wieder die Dosierwelle antreiben.

Bei einer weiteren Ausgestaltung der Erfindung sind die Betätigungsmittel zur wahlweisen Aufhebung der Betätigbarkeit einzelner Kupplungen in ihren axialen Positionen veränderbar auf einer Lagerachse gelagert, insbesondere axial verschiebbar. Durch die Veränderung ihrer axialen Position auf der Lagerachse können die Betätigungsmittel derart von den Schalträdern und/oder den Kupplungen in axialer Richtung entfernt werden, dass die Betätigungsmittel von den Schalträdern nicht mehr ansteuerbar und/oder die Kupplungen nicht mehr durch die Betätigungsmittel betätigbar sind. Die Lagerachse der Betätigungsmittel verläuft vorzugsweise parallel zur Schaltwelle und/oder zur Antriebswelle. Durch die axiale Positionsveränderung auf der Lagerachse kann die Position der Betätigungsmittel auch axial entlang der Schaltwelle bzw. der Antriebswelle verändert werden. Die Betätigungsmittel können drehfest an der, insbesondere nicht um ihre Längsachse rotierbaren, Lagerachse gelagert sein. Zur Steigerung der Anpassbarkeit der Sämaschine können die einzelnen Betätigungsmittel unabhängig voneinander in ihrer axialen Position verändert werden.

In einer vorteilhaften Ausgestaltung weist die Sämaschine in ihrer Axialposition entlang der Lagerachse mit den Betätigungsmitteln vertauschbare Distanzstücke auf. Bei der Veränderung der axialen Position eines Betätigungsmittels entlang der Lagerachse kann das Distanzstück mit diesem vertauscht werden. Das Betätigungsmittel und das ihm zugeordnete Distanzstück können auf diese Weise unabhängig von der axialen Position des Betätigungsmittels den gleichen Bereich entlang der Längsachse einnehmen. Auf diese Weise kann ein unbeabsichtigtes axiales Verrutschen des Betätigungsmittels während des Ausbringens des Saatguts, beispielsweise aufgrund von Erschütterungen, verhindert werden, da die Position, in welche das Betätigungsmittel in diesem Falle rutschen würde, von dem Distanzstück eingenommen wird. Die Gemeinschaft aus Betätigungsmitteln und dem ihm zugeordneten Distanzstück kann in axialer Richtung der Lagerachse formschlüssig gelagert sein.

Bei einer vorteilhaften Ausgestaltung sind die Dosierräder der Dosiereinheiten ohne die Demontage der Antriebswelle und/oder benachbarter Dosiereinheiten austauschbar. Auf diese Weise können die Dosierräder der einzelnen Dosiereinheiten aus diesen entnommen und zu Reparaturzwecken oder zur Anpassung an ein anderes Saatgut durch andere Dosierräder ersetzt werden. Auf eine zeit- und arbeitsaufwendige Demontage der Antriebswelle, wie sie im Stand der Technik zur Zugänglichmachung der Dosierräder erforderlich ist, kann verzichtet werden. Da Dosierräder individueller Dosiereinheiten ausgetauscht werden können, ohne dass benachbarte Dosiereinheiten hierzu demontiert werden müssen, insbesondere ohne die Dosierräder oder Dosierwellen dieser benachbarten Dosiereinheiten entnehmen zu müssen, kann die Zeit für Wartung und Instandhaltungen einzelner Dosiereinheiten verbessert werden.

In vorteilhafter Weise sind das Dosierrad, die Dosierwelle und das Antriebselement einer Dosiereinheit Teile einer aus einem Dosiergehäuse der Dosiereinheit entnehmbaren Austauscheinheit. Die Austauscheinheit kann auf einfache Art und Weise aus dem Dosiergehäuse entnommen werden. Auf diese Weise kann die gesamte Austauscheinheit gegen eine andere in das Dosiergehäuse einsetzbare Austauscheinheit ersetzt werden. Alternativ oder zusätzlich kann die aus dem Dosiergehäuse entnommene Austauscheinheit zu Wartungs- und Instandhaltungszwecken oder zum Austausch einzelner Bestandteile, wie beispielsweise des Dosierrads, demontiert werden, um anschließend wieder zusammengesetzt und in das Dosiergehäuse eingesetzt zu werden.

In diesem Zusammenhang hat es sich als vorteilhaft erwiesen, wenn die Austauscheinheit von komplementär ausgestalteten, unrunden Ausnehmungen des Dosiergehäuses aufnehmbare, insbesondere tropfförmige, Lagerelemente zur drehbaren Lagerung der Dosierwelle aufweist. Mit diesen Lagerelementen kann die Austauscheinheit auf einfache Art und Weise an dem Dosiergehäuse der Dosiereinheit angeordnet werden. Durch ihre komplementäre Ausgestaltung zu den unrunden Ausnehmungen des Dosiergehäuses können die Lagerelemente selbst drehfest an dem Dosiergehäuse angeordnet werden. Insbesondere können die Lagerelemente zur einfachen Montage und Demontage in die Ausnehmung des Dosiergehäuses eingesteckt werden. Mit den Lagerelementen kann die Dosierwelle drehbar gegenüber dem Dosiergehäuse gelagert und zugleich gegen Translationsbewegungen gesichert werden.

Es ist möglich, dass die Dosierwelle einer Dosiereinheit einstückig mit dem ihr zugeordneten Dosierrad und/oder dem ihr zugeordneten Antriebselement ausgestaltet ist. Durch die einstückige Ausgestaltung kann eine Drehmomentübertragung von dem Antriebselement auf die Dosierwelle und/oder von der Dosierwelle auf das ihr zugeordneten Dosierrad zuverlässig hergestellt werden.

In einer weiteren Ausführungsform der Erfindung ist die Dosierwelle, insbesondere die Lagerelemente der Austauscheinheit, einer Dosiereinheit durch einen Gehäusedeckel der Dosiereinheit an einem Dosiergehäuse der Dosiereinheit radial fixiert. Mit dem Gehäusedeckel kann die Dosierwelle, insbesondere die Lagerelemente, der Austauscheinheit zwischen dem Gehäusedeckel und dem Dosiergehäuse derart eingeschlossen werden, dass sie sich nicht radial zu diesen bewegt. Der Gehäusedeckel kann lösbar und/oder verschwenkbar an dem Dosiergehäuse angeordnet sein, so dass er in eine die Dosierwelle, insbesondere die Austauscheinheit, freigebende Position überführt werden kann. In dieser Position des Gehäusedeckels kann von dosiereinheitsaußen auf das Innere der Dosiereinheit zugegriffen werden. Insbesondere können das Dosierrad, die Dosierwelle und/oder die Austauscheinheit aus dem Dosiergehäuse entnommen werden.

Weitere Einzelheiten und Vorteile der Erfindung werden nachfolgend anhand des in den Figuren schematisch dargestellten Ausführungsbeispiels der Erfindung exemplarisch erläutert. Darin zeigt:
- Fig. 1a: eine perspektivische Ansicht einer an eine landwirtschaftliche Zugmaschine angekoppelten, erfindungsgemäßen Sämaschine;
- Fig. 1b: eine perspektivische Ansicht eines Teils der Sämaschine von schräg hinten;
- Fig. 2: Ansichten der Sämaschine entgegen der Fahrtrichtung, von oben und in Fahrtrichtung;
- Fig. 3: eine perspektivische, ausschnittsweise, geschnittene Ansicht eines Vorratsbehälters und einer Dosiereinheit der Sämaschine;
- Fig. 4 und 5: Seitenansichten unterschiedlicher parallel zur Fahrtrichtung verlaufender Schnitte durch die erfindungsgemäße Sämaschine;
- Fig. 6 bis 8: perspektivische Ansichten der Komponenten der Dosiereinheit sowie weiterer im Bereich der Dosiereinheit angeordneter Komponenten der Sämaschine;
- Fig. 9: eine ausschnittsweise, geschnittene Seitenansicht der in den Fig. 6 bis 8 dargestellten Komponenten in Verbindung mit dem Vorratsbehälter der Sämaschine, und
- Fig. 10: eine Explosionsdarstellung einer Austauscheinheit.

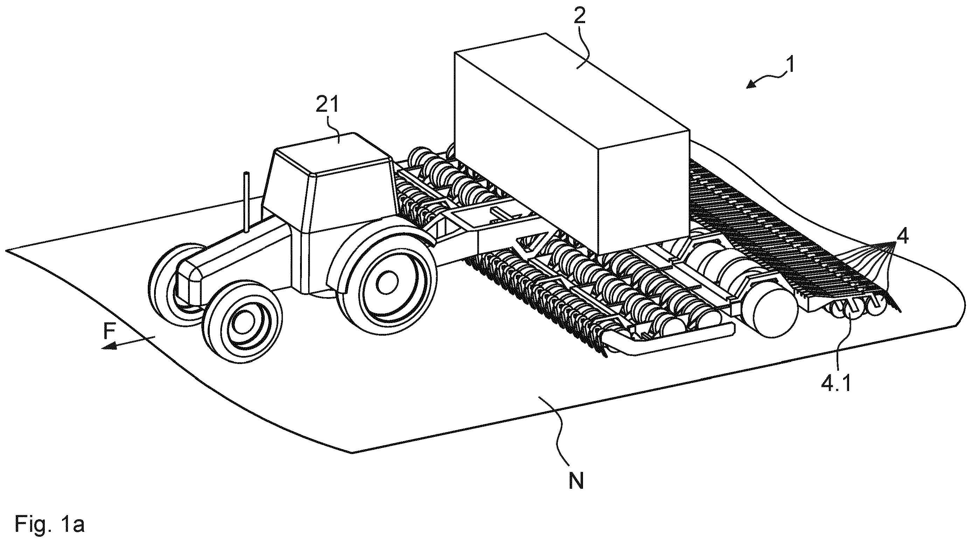

In Fig. 1a ist eine Sämaschine 1 gezeigt, welche zum Ausbringen von Saatgut auf einer landwirtschaftlichen Nutzfläche N entlang einer Fahrtrichtung F von einer landwirtschaftlichen Zugmaschine 21 über die Nutzfläche N bewegt wird. Um das Saatgut auf der gesamten landwirtschaftlichen Nutzfläche N auszubringen, bewegt die Zugmaschine 21 die Sämaschine 1 in mehreren Bahnen über die Nutzfläche N.

Wenngleich in Fig. 1a die Sämaschine 1 als eine gezogene Maschine dargestellt ist, kann es sich bei der Sämaschine 1 auch um eine selbstfahrende Maschine handeln, welche keine zusätzliche Zugmaschine 21 zur Bewegung benötigt, oder um eine angebaute Maschine, welche von der Zugmaschine 21 getragen wird.

Die Sämaschine 1 umfasst einen Vorratsbehälter 2, in welchem das auszubringende Saatgut aufgenommen wird. Um dieses Saatgut auf der landwirtschaftlichen Nutzfläche N auszubringen, wird es vom Vorratsbehälter 2 aus einzelnen Säeinheiten 4 zugeleitet. Jede dieser Säeinheiten 4 weist ein Säschar 4.1 auf, welcher eine Furche in der Nutzfläche N bildet und in welche das aus dem Vorratsbehälter 2 stammende Saatgut eingebracht wird. Über die parallel zueinander angeordneten Säeinheiten 4 wird das Saatgut auf diese Weise in parallel verlaufende Saatreihen flächig auf der Nutzfläche N ausgebracht. Wenngleich die Säeinheiten 4 als Bestandteil der Sämaschine 1 dargestellt sind, kann es sich bei diesen auch um Anbauteile der eigentlichen Sämaschine 1 handeln.

Damit das Saatgut gleichmäßig auf der Nutzfläche N ausgebracht wird, weist die Sämaschine 1 mehrere nebeneinander angeordnete Dosiereinheiten 3 auf, welche das im Vorratsbehälter 2 gelagerte Saatgut in dosierten Mengen abgeben. Von diesen Dosiereinheiten 3 werden die Säeinheiten 4 mit Saatgut versorgt.

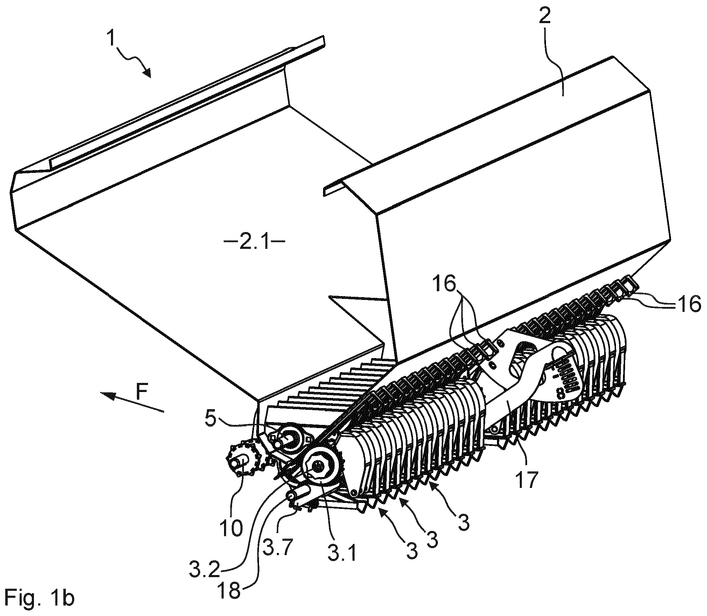

In Fig. 1b sind diese an dem Vorratsbehälter 2 angeordneten Dosiereinheiten 3 gezeigt. Die Dosiereinheiten 3 sind relativ zur Fahrtrichtung F auf der Rückseite des Vorratsbehälters 2 angeordnet. Auf diese Weise sind sie den Säeinheiten 4 zugewandt, was die Versorgung der Säeinheiten mit Saatgut durch die Dosiereinheiten 3 vereinfacht.

Da der Vorratsbehälter 2 in Fig. 1b ohne seine Seitenwände dargestellt ist, gestattet diese Ansicht einen Blick auf das Saatgutreservoir 2.1, in welchem das Saatgut nach Art eines losen Schüttguts aufgenommen wird.

Neben den Zulaufschiebern 16, welche es ermöglichen, die jeweiligen Aufnahmeöffnungen 3.9 der Dosiereinheiten 3, durch welche das Saatgut vom Vorratsbehälter 2 aus in die jeweiligen Dosiereinheiten 3 eintreten kann, zu verschließen, ist die in der Abbildung vorderste Dosiereinheit 3 ohne ihr Gehäuse dargestellt. Auf diese Weise lässt sich das im Inneren der Dosiereinheit 3 angeordnete Dosierrad 3.1 erkennen. Dieses Dosierrad 3.1 ist drehbar in der Dosiereinheit 3 gelagert und dient zur Dosierung des Saatguts.

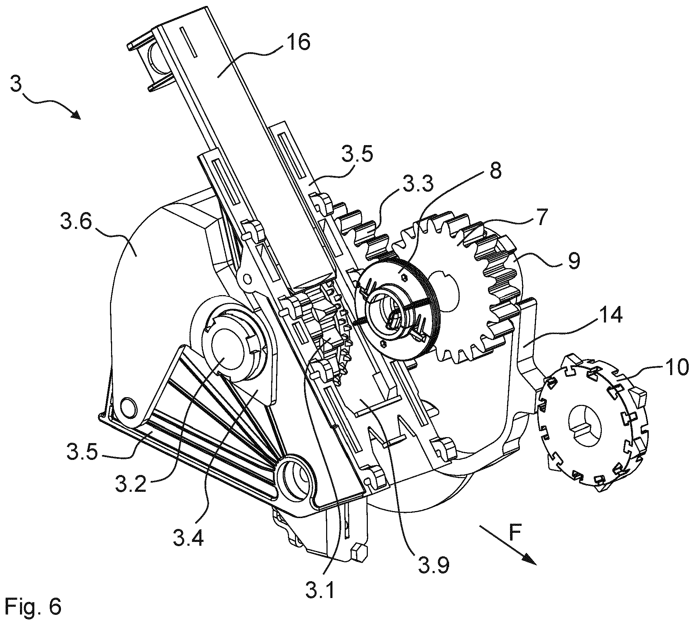

Wie in den Fig. 6 bis 8 genauer zu erkennen ist, weist dieses Dosierrad 3.1 mehrere Dosierkammern entlang seines Umfangs auf, welche durch einzelne Zähne voneinander getrennt werden. In diesen Kammern transportiert das sich drehende Dosierrad 3.1 das vom Saatgutreservoir 2.1 in die Dosiereinheit 3 einströmende Saatgut nach unten weg. Zur Dosierung wirkt das Dosierrad 3.1 mit der unterhalb des Dosierrads 3.1 angeordneten Bodenklappe 3.7 zusammen.

Die Bodenklappe 3.7 ist in Richtung des Dosierrads 3.1 vorgespannt und dient als Abstreifer, welcher aus den Dosierbereichen des über sie hinweggleitenden Dosierrads 3.1 herausragende Saatgutmengen abstreift. Auf diese Weise gibt das Dosierrad 3.1 auf der dem Saatgutreservoir 2.1 gegenüberliegenden Seite der Dosiereinheit 3 lediglich jene vorbestimmte Saatgutdosis ab, welche in seine Dosierbereiche und zwischen diesen und der Bodenklappe 3.7 passt. Um die Saatgutdosis zu erhöhen, kann der Abstand sämtlicher Bodenklappen 3.7 der einzelnen Dosiereinheiten 3 zu den ihnen zugeordneten Dosierrädern 3.1 gemeinschaftlich über den Hebel 17 verändert werden. Diese Veränderung kann in mehreren den Rastpositionen des Hebels 17 entsprechenden Schritten erfolgen. Hierzu sind die Bodenklappen 3.7 um die Lagerachse 18 herum schwenkbar angeordnet. Aufgrund dieses einstellbaren größeren Abstandes zwischen dem Dosierrad 3.1 und der Bodenklappe 3.7 kann das drehende Dosierrad 3.1 eine größere Saatgutmenge an der Bodenklappe 3.7 vorbeifördern und diese als Saatgutdosis abgeben.

Bei der erfindungsgemäßen Sämaschine 1 wird das Dosierrad der Dosiereinheit von einer Dosierwelle 3.2 der Dosiereinheit 3 angetrieben. Um die einzelnen Dosierwellen 3.2 der jeweiligen Dosiereinheiten 3 antreiben zu können, weist die erfindungsgemäße Sämaschine 1 eine Antriebswelle 5 zum Antrieb dieser Dosierwelle 3.2 auf. Diese Antriebswelle 5 ist dabei in Fahrtrichtung vor den Dosierrädern 3.1 angeordnet. Auf diese Weise sind die Dosiereinheiten 3 von in Fahrtrichtung F hinten für Wartungs-, Reparatur und Instandhaltungsarbeiten frei zugänglich, ohne von der sich quer zur Fahrtrichtung F erstreckenden Antriebswelle 5 blockiert zu werden.

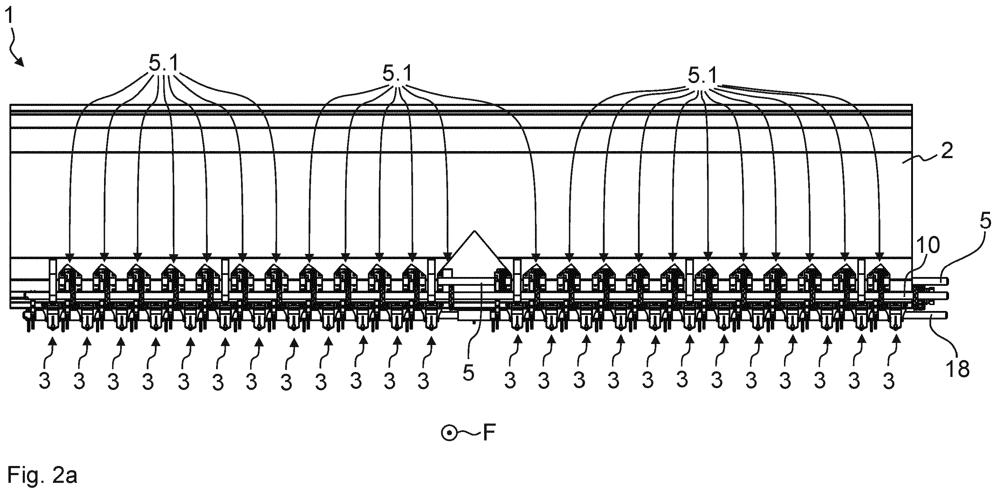

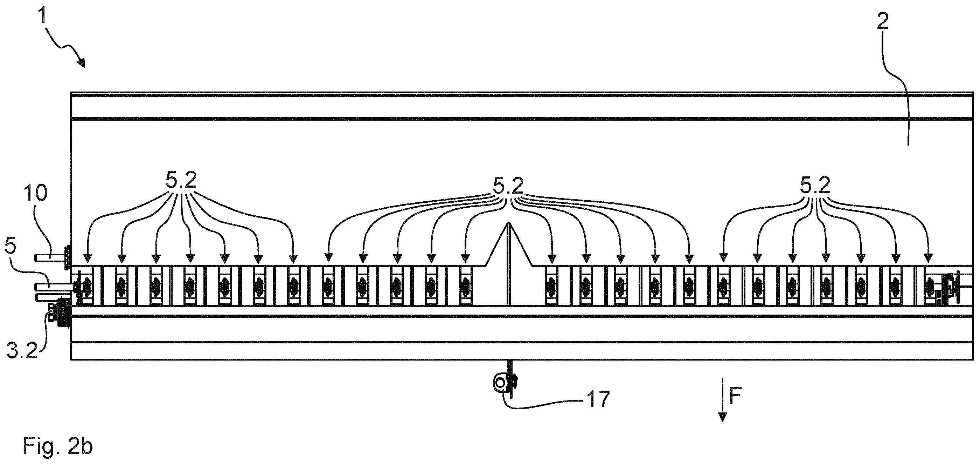

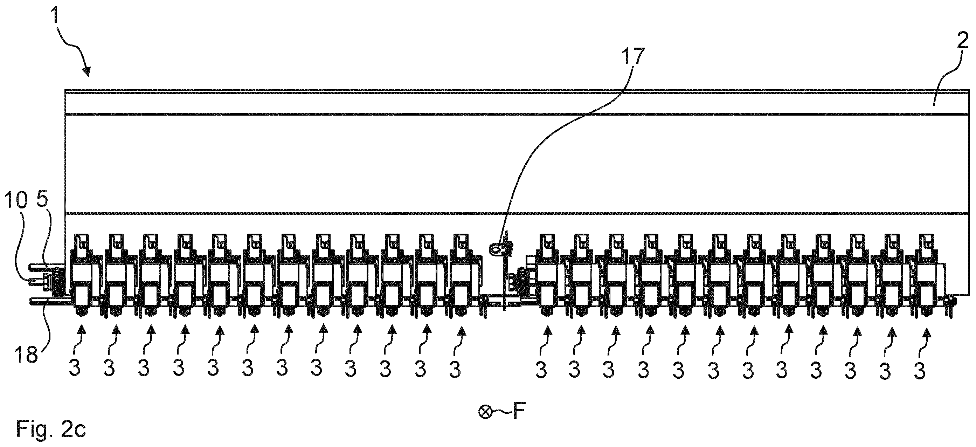

Neben der Antriebswelle 5 ist in den Fig. 1 und 2 zusätzlich eine in Fahrtrichtung F vor der Antriebswelle 5 angeordnete Schaltwelle 10 gezeigt, auf welche in Zusammenhang mit den Fig. 6 bis 9 näher eingegangen wird. Zu erkennen ist jedoch, dass die Schaltwelle 10 im Wesentlichen auf gleicher Höhe wie die Dosierwellen 3.2 der einzelnen Dosiereinheiten 3 angeordnet ist.

Wie sich den Fig. 1b bis 2c entnehmen lässt, sind die nebeneinander angeordneten Dosiereinheiten 3 in dem dargestellten Ausführungsbeispiel der Sämaschine 1 baugleich zueinander ausgestaltet. Auf diese Weise erfolgt der Antrieb sämtlicher Dosierräder 3.1 der Dosiereinheiten 3 über die Antriebswelle 5.

Die Antriebswelle 5 ist in dem dargestellten Ausführungsbeispiel der Sämaschine 1 nicht nur in Fahrtrichtung F vor den Dosierrädern 3.1, sondern auch oberhalb der Dosierwelle 3.2 angeordnet. Die Antriebswelle 5 verläuft daher im gleichen Bereich, welcher von dem Vorratsbehälter 2 eingenommen wird. Die Antriebswelle 5 durchstößt den Vorratsbehälter 2 und insbesondere dessen Saatgutreservoir 2.1 mehrfach, wie insbesondere in den Fig. 2a und 2b zu erkennen ist. Teile der Antriebswelle 5 sind somit innerhalb des Vorratsbehälters 2 angeordnet, während andere Bereiche der Antriebswelle 5 außerhalb des Vorratsbehälters 2 angeordnet sind, jedoch mehrseitig von diesen umgeben werden.

Die außerhalb des Vorratsbehälters 2 angeordneten Bereiche der Antriebswelle 5 bilden Antriebsbereiche 5.1 zum Antrieb der Dosierwellen 3.2. Da die Antriebsbereiche 5.1 wie auch die Dosiereinheiten 3 außerhalb des Vorratsbehälters angeordnet sind, ermöglicht dies einen einfachen Antrieb der Dosierräder 3.1 durch die Antriebsbereiche 5.1. Denn die Antriebsbereiche 5.1 müssen hierzu nicht aus dem Inneren des Vorratsbehälters 2 herausragen, um die außerhalb des Vorratsbehälters 2 angeordneten Dosiereinheiten 3 antreiben zu können. Zudem wird auf diese Weise ein Kontakt zwischen dem im Inneren des Vorratsbehälters 2 angeordneten Saatgut und der dem Antrieb der Dosiereinheiten 3 dienenden Antriebsbereiche 5.1 der Antriebswelle 5 vermieden, so dass es zu keiner Blockierung durch das Saatgut oder einer Verunreinigung des Saatguts kommt.

Die im Vorratsbehälter 2 angeordneten Bereiche der Antriebswelle 5 bilden Rührbereiche 5.2, welche zum Durchrühren des Saatguts genutzt werden können, um ein Verklumpen des Saatguts während des Ausbringens zu verhindern und einer Brückenbildung zwischen den Antriebsbereichen 5.1 vorzubeugen.

Entlang der Längsachse der Antriebswelle 5 sind die Antriebsbereiche 5.1 und die Rührbereiche 5.2 alternierend angeordnet. Zwischen dem Antriebsbereich 5.1 und dem Rührbereich 5.2 durchstößt die Antriebswelle 5 somit den Vorratsbehälter 2 von außen, um am Ende des Rührbereichs 5.2 hin zum nächsten Antriebsbereich 5.1 den Vorratsbehälter 2 von innen nach au-βen zu durchstoßen.

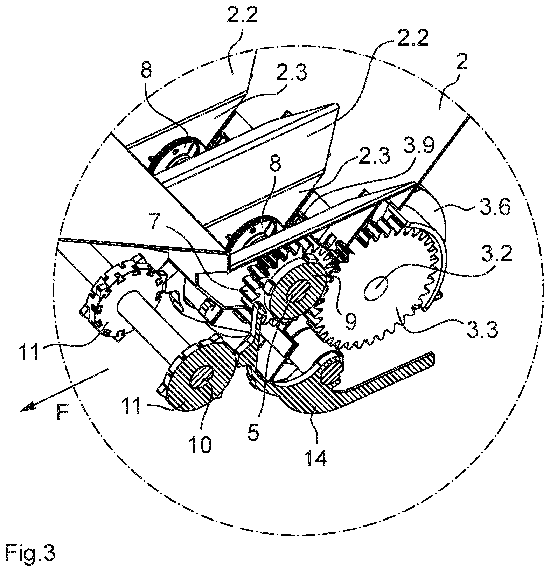

Um die Antriebsbereiche 5.1 und die Rührbereiche 5.2 der Antriebswelle 5 voneinander zu trennen und einen Austritt von Saatgut in Richtung der Antriebsbereiche 5.1 zu verhindern, weist der Vorratsbehälter 2 im Bereich der Antriebswelle 5 periodisch nach innen gewölbte Wandungen auf, welche in Fig. 3 näher gezeigt sind. Zu dieser Wandung zählt insbesondere das nach Art eines Spitzdaches ausgestaltete Abdeckelement 2.2, welches den unter ihm angeordneten Antriebsbereich 5.1 abdeckt und vom Inneren des Vorratsbehälters 2 trennt. Neben diesen Abdeckelementen 2.2 weist der Vorratsbehälter 2 wandartige und sich quer zur Antriebswelle 5 erstreckende Einhausungen 2.3 zur Trennung des Inneren des Vorratsbehälters 2 und insbesondere des Saatgutreservoirs 2.1 von dem Antriebsbereich 5.1 auf.

Wie auch in Fig. 1b und 2b zu erkennen ist, sind mehrere der Abdeckelemente 2.2 derart zueinander benachbart angeordnet, dass ihre schrägen Flächen quer zur Fahrtrichtung F weisen. Benachbarte Abdeckelemente 2.2 wirken auf diese Weise quer zur Fahrtrichtung wie Trichter zusammen. Die benachbarten Abdeckelemente 2.2 leiten dabei das sich im Saatgutreservoir 2.1 befindliche Saatgut beim gravitationsbedingten Rutschen nach unten in Richtung der Rührbereiche 5.2, welche zwischen den benachbarten Abdeckelementen 2.2 angeordnet sind. Aufgrund der Dachform wirkt jedes Abdeckelement 2.2 sowohl mit dem nächsten links als auch rechts benachbarten Abdeckelement 2.2 trichterförmig zusammen.

Um das Durchrühren des Saatguts in dem Rührbereich 5.2 zusätzlich zu verstärken, weist die Antriebswelle 5 in diesem Rührelemente 8 auf. Diese scheibenförmigen Rührelemente 8 sind drehfest an der Antriebswelle 5 angeordnet und weisen zur Steigerung des Rühreffekts parallel zur Antriebswelle 5 von der Scheibe der Rührelemente 8 hervorragende Vorsprünge auf.

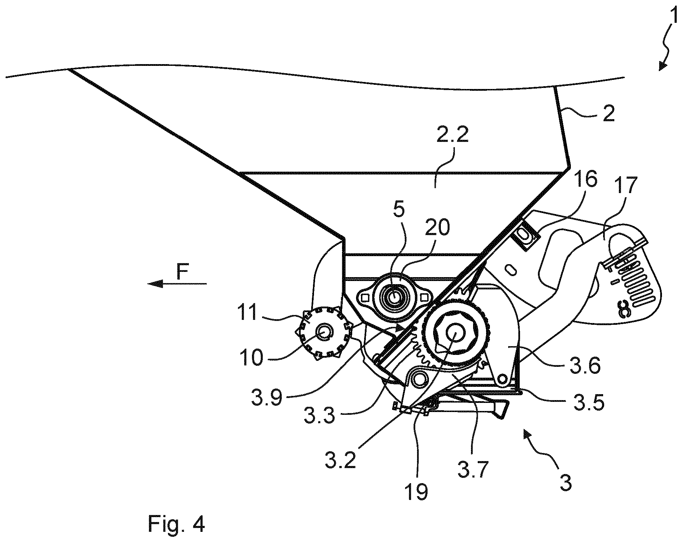

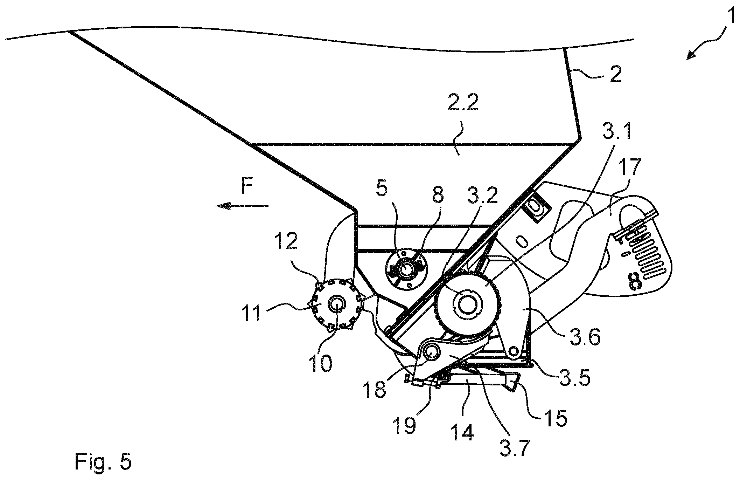

Wie in Fig. 3 gezeigt, ist unter dem Abdeckelement 2.2 der Antriebsbereich 5.1 der Antriebswelle 5 außerhalb des Vorratsbehälters 2 angeordnet. In diesem Antriebsbereich 5.1 weist die Antriebswelle 5 ein Koppelelement 7 auf, welches mit einem Antriebselement 3.3 der Dosiereinheit 3 zusammenwirkt, um die Antriebswelle 5 mit der Dosierwelle 3.2 zu koppeln. Das Koppelelement 7 sowie das Antriebselement 3.3 sind dabei als ineinander eingreifende Zahnräder ausgestaltet. Eine Drehung der Antriebswelle 5 im Uhrzeigersinn überträgt sich auf diese Weise auf das sich dann ebenfalls im Uhrzeigersinn drehende Koppelelement 7, welches das Antriebselement 3.3 entgegen des Uhrzeigersinns in Drehung versetzt. Diese Drehung des Antriebselements 3.3 entgegen dem Uhrzeigersinn wird von diesem auf die in Fig. 3 vom Antriebselement 3.3 verdeckte Dosierwelle 3.2 übertragen, welche wiederum das in Fig. 3 ebenfalls vom Antriebselement 3.3 verdeckte Dosierrad 3.1 der Dosiereinheit 3 in eine entgegen dem Uhrzeigersinn gerichtete Drehrichtung antreibt, wobei diese Drehrichtungsangaben für die Perspektiven in Fig. 3 bis 5 gelten. Das sich derart entgegen dem Uhrzeigersinn drehende Dosierrad 3.1 kann durch die Aufnahmeöffnung 3.9 der Dosiereinheit 3 vom Saatgutreservoir 2.1 her einströmendes Saatgut, wie bereits obenstehend beschrieben, aufnehmen, nach unten in Richtung der Bodenklappe 3.7 fördern und auf der der Aufnahmeöffnung 3.9 gegenüberliegenden Seite der Dosiereinheit 3 in dosierter Form abgeben. Dieser Aufbau ist auch in den Fig. 4 und 5 gezeigt.

In Fig. 4 ist dabei eine Seitenansicht der Sämaschine 1 gezeigt, bei welcher, wie bereits in Fig. 1b, die Seitenwand des Vorratsbehälters 2 ebenso wenig wie das Gehäuse 3.5 der in der Abbildung vorderen Dosiereinheit 3 dargestellt ist. Dabei lässt sich zum einen das Wellenlager 20 erkennen, mit welchem die den Vorratsbehälter 2 mehrfach durchstoßende Antriebswelle 5 drehbar an der Seitenwand des Vorratsbehälters 2 gelagert ist. Auch ist neben dem Zulaufschieber 16, mit welchem die Aufnahmeöffnung 3.9 der Dosiereinheit 3 verschlossen werden kann, die bereits obenstehend beschriebene und die Bodenklappe 3.7 in Richtung des Dosierrads 3.1 vorspannende Feder 19 gezeigt.

Das in Fig. 4 und 5 dargestellte Dosiergehäuse 3.5 sowie der schwenkbar an dem Dosiergehäuse 3.5 angeordnete Gehäusedeckel 3.6 gehören dabei nicht zur vorderen Dosiereinheit, sondern zu der in Darstellungsrichtung dahinterliegenden baugleichen Dosiereinheit 3. Das Gleiche gilt auch für das in Fig. 4 zu erkennende Antriebselement 3.3, welches ebenfalls zu der hinteren Dosiereinheit 3 gehört. Da für die in Fig. 4 an vorderster Stelle dargestellte Dosiereinheit 3 ebenfalls das Antriebselement 3.3 nicht dargestellt ist, kann durch die so freigegebene Sicht auf das Antriebselement 3.3 der dahinterliegenden Dosiereinheit 3 gut erkannt werden, dass das Antriebselement 3.3 im Bereich des Antriebsbereichs 5.1 der Antriebswelle 5 zwischen zwei benachbarte Einhausungen 2.3 des Vorratsbehälters 2 eingreift, um mit dem dort angeordneten Koppelelement 7 der Antriebswelle 5 zusammenzuwirken. Wie auch dieses Koppelelement 7 ist das Antriebselement 3.3 durch das Abdeckelement 2.2 und die Einhausungen 2.3 des Vorratsbehälters 2 vom Saatgutreservoir 2.1 getrennt.

Anhand von Fig. 4 sowie von Fig. 5, welche einen Querschnitt im Rührbereich 5.2 zeigt und damit einen genauen Blick auf das Rührelement 8 ermöglicht, lässt sich ein wesentlicher Vorteil der erfindungsgemäßen Sämaschine 1 erkennen. Denn während des Dosierens, bei welchem sich das Dosierrad 3.1 in diesen Darstellungen entgegen dem Uhrzeigersinn dreht und Saatgut in Richtung der Bodenklappe 3.7 fördert, übt die über die Feder 19 vorgespannte Bodenklappe 3.7 eine in den Figuren nach oben gerichtete Kraft auf das Dosierrad 3.1 und damit auch auf die Dosierwelle 3.2 aus. Diese auf die Dosierwelle 3.2 wirkende Kraft kann dabei den Verschleiß der Dosierwelle beschleunigen.

Insbesondere bei Ausgestaltungen, bei welchen die Dosierwelle durch den schwenkbaren Gehäusedeckel 3.6 an dem Dosiergehäuse 3.5 befestigt wird, kann diese Kraft zudem zu einem ungewollten Aufschwenken des Gehäusedeckels 3.6 führen, so dass sich die Dosierwelle 3.2 inklusive des Dosierrads 3.1 gegenüber dem Dosiergehäuse 3.5 verschieben und im schlimmsten Fall aus diesem herausspringen kann. Durch die Anordnung der zum Antrieb der Dosierwellen 3.2 dienenden Antriebswelle 5 in Fahrtrichtung vor den Dosierrädern 3.1 und insbesondere auch durch die Anordnung der Antriebswelle 5 oberhalb der Dosierwellen 3.2 wird dieser Kraft entgegengewirkt. Denn bei der Drehmomentübertragung von der Antriebswelle 5 über das Koppelelement 7 und das Antriebselement 3.3 auf die Dosierwelle 3.2 wirkt aufgrund der Anordnung der Antriebswelle 5 eine Kraft auf die Dosierwelle 3.2, welche eine der von der Bodenklappe 3.7 ausgeübten Kraft entgegengesetzte Komponente aufweist. Die von der Antriebswelle 5 und von der Bodenklappe 3.7 auf die Dosierwelle 3.2 ausgeübten Kräfte kompensieren sich auf diese Weise teilweise, so dass eine deutlich geringere Gesamtkraft auf die Dosierwelle 3.2 wirkt. Diese geringe Gesamtkraft reduziert sowohl den Verschleiß als auch die Gefahr eines unbeabsichtigten Aufschwenkens des Gehäusedeckels 3.6 und eines Verrutschens der Dosierwelle 3.2 und des Dosierrads 3.1.

Auf weitere Details des Zusammenspiels dieser Komponenten der Sämaschine 1 sowie insbesondere auch auf die über einen Lagerarm in Fahrtrichtung vor der Antriebswelle 5 an dem Vorratsbehälter 2 gelagerte Schaltwelle 10 wird im Folgenden anhand der diese Elemente genauer zeigenden Fig. 6 bis 9 näher eingegangen.

Die Fig. 6 bis 9 zeigen zunächst eine Dosiereinheit 3 der Sämaschine 1 aus unterschiedlichen Perspektiven und teilweise ohne Dosiergehäuse 3.5. Wie jede der baulich gleich ausgestalteten Dosiereinheiten weist auch diese Dosiereinheit 3 eine eigene Dosierwelle 3.2 auf, welche sich quer zur Fahrtrichtung F erstreckt. Diese Dosierwelle 3.2 der Dosiereinheit 3 dient sowohl dem Antrieb als auch der Lagerung des Dosierrads 3.1 im Dosiergehäuse 3.5.

Das dargestellte Dosierrad 3.1 weist insgesamt vier umfänglich verlaufende Zahnreihen auf, wobei die einzelnen Zähne die zur Dosierung des Saatguts dienenden Dosierbereiche des Dosierrads 3.1 begrenzen. Jeweils zwei dieser Reihen sind identisch, jedoch um einen dem halben Zahnabstand in Umfangsrichtung gegeneinander versetzt. Zudem weisen die beiden in Fig. 6 links dargestellten Zahnreihen größere Zähne als die beiden rechts dargestellten Zahnreihen auf. Der Dosierbereich der beiden linken Zahnreihen des Dosierrads 3.1 dient dabei der Dosierung gröberen Saatguts, während die Dosierbereiche der beiden rechten Zahnreihen des Dosierrads 3.1 der Dosierung feineren Saatguts dienen. Wenngleich diese Reihen von Dosierbereichen im dargestellten Ausführungsbeispiel einstückig als ein einziges Dosierrad 3.1 ausgestaltet sind, so können diese gleichwohl auch jeweils durch ein einzelnes Dosierrad 3.1 gebildet werden. In diesem Fall würde die Dosiereinheit 3 mehrere Dosierräder 3.1 aufweisen, welche gemeinschaftlich von der Dosierwelle 3.2 der Dosiereinheit 3 angetrieben werden. In gleicher Weise könnte das Dosierrad 3.1 auch nur Reihen von Dosierbereichen gleicher Abmessungen aufweisen, so dass das Dosierrad 3.1 nur zum Dosieren feinen Saatguts oder nur zum Dosieren groben Saatguts ausgelegt ist. Gleichwohl kann das Dosierrad 3.1 auch nur eine einzige umfänglich verlaufende Reihe von Dosierbereichen aufweisen.

Da jede Dosiereinheit 3 eine eigene Dosierwelle 3.2 aufweist, gestattet diese Konstruktion eine Lagerung der Dosierräder 3.1 über die jeweilige ihr zugeordnete Dosierwelle 3.2, welche unabhängig von den Dosierrädern 3.1 der anderen Dosiereinheiten 3 ist.

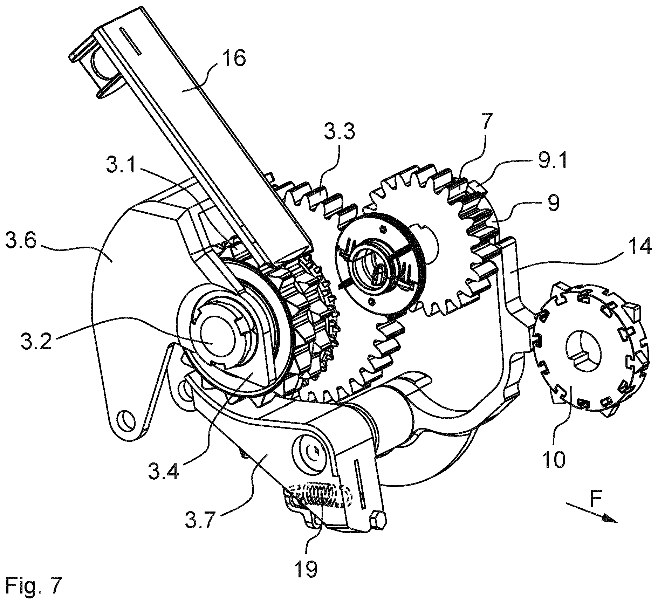

In dem dargestellten Ausführungsbeispiel der Dosiereinheit 3 wird die Dosierwelle 3.2 zwischen dem Dosiergehäuse 3.5 und dem Gehäusedeckel 3.6, welcher schwenkbar an dem Dosiergehäuse 3.5 angeordnet ist, gehalten. In ihrer radialen Richtung wird die Dosierwelle 3.2 auf diese Weise durch den Gehäusedeckel 3.6 der Dosiereinheit 3 an dem Dosiergehäuse 3.5 radial fixiert. Um weiterhin eine Rotation der Dosierwelle 3.2 um ihre Längsachse zu ermöglichen, ist die Dosierwelle 3.2 an quer zur Fahrtrichtung F gegenüberliegenden Seiten des Dosiergehäuses 3.5 in den Lagerelementen 3.4 drehbar gelagert. Diese Lagerelemente 3.4 weisen eine im Wesentlichen tropfenförmige Geometrie mit einem kreisförmigen und einem spitz zulaufenden Bereich auf, wie dies insbesondere in Fig. 7 zu erkennen ist. Aufgenommen werden die Lagerelemente 3.4 in einer komplementär ausgestalteten Ausnehmung des Dosiergehäuses 3.5, welche eine spitz zulaufende Form aufweist, sowie einer kreissegmentförmigen Ausnehmung des Gehäusedeckels 3.6. Die Lagerelemente 3.4 können auf diese Weise zusammen mit der Dosierwelle 3.2 reproduzierbar in die gleiche Position in das Dosiergehäuse 3.5 eingesetzt werden. Durch ihre unrunde Form wirken die Lagerelemente 3.4 einem Verdrehen entgegen, sobald sie in das Dosiergehäuse 3.5 eingesetzt sind.

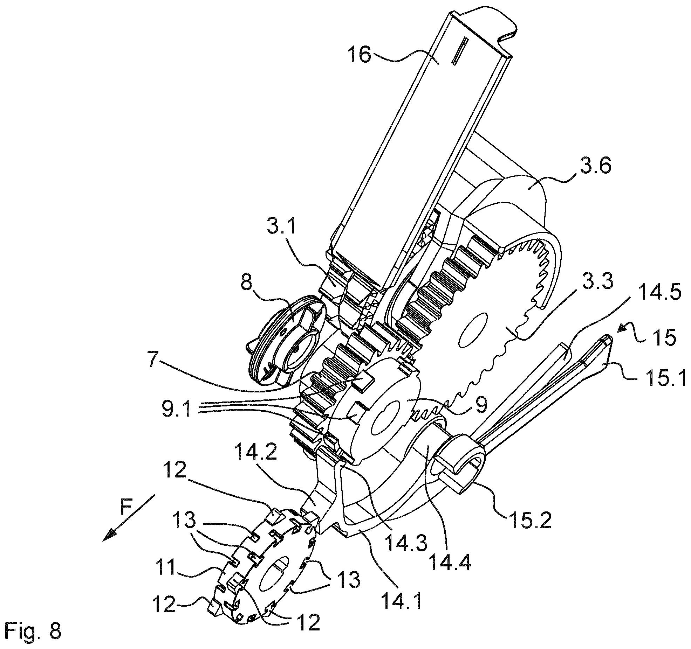

Der Gehäusedeckel 3.6 ist derart ausgestaltet, dass er das Dosierrad 3.1 entgegen der Fahrtrichtung F sowie zu den Seiten hin teilweise umschließt, um so jene Bereiche vor äußeren Einflüssen zu schützen, welche nicht bereits durch das Dosiergehäuse 3.5 vor solchen sämaschinenäußeren Einflüssen geschützt werden. Wie in Fig. 8 zu erkennen, schützt der Gehäusedeckel 3.6 auch das Antriebselement 3.3 der Dosiereinheit 3 teilweise gegen äußere Einflüsse. Jedoch umgibt der Gehäusedeckel 3.6 das Antriebselement 3.3 nur teilweise auf der entgegen zur Fahrtrichtung F gelegenen Rückseite sowie teilweise auf der zum Dosierrad 3.1 weisenden Seitenfläche. Die vom Dosierrad 3.1 wegweisende Seitenfläche des Antriebselements 3.3 wird vom Gehäusedeckel 3.6 hingegen nicht abgedeckt.

Ohne dass die Antriebswelle 5 in den Fig. 6 bis 8 dargestellt ist, zeigen diese dennoch das scheibenförmige Rührelement 8 des Rührbereichs 5.2, welches in Fahrtrichtung F vor der Aufnahmeöffnung 3.9 der Dosiereinheit 3 angeordnet ist. Zum anderen ist auch das Koppelelement 7, welches sich im Eingriff mit dem Antriebselement 3.3 der Dosiereinheit 3 befindet, dargestellt.

Solange das Koppelelement 7 drehfest an der Antriebswelle 5 angeordnet ist, ist die nicht dargestellte Antriebswelle 5 über das Koppelelement 7, das Antriebselement 3.3 sowie die Dosierwelle 3.2 kraftschlüssig mit dem Dosierrad 3.1 der Dosiereinheit 3 verbunden und treibt dieses an, sofern die Antriebswelle 5 selbst angetrieben wird.

In einigen Betriebssituationen der Sämaschine 1 ist es jedoch erforderlich, dass einige der Dosiereinheiten 3 kein Saatgut abgeben, so dass in einigen der Saatreihen kein Saatgut ausgebracht wird. Dies kann beispielsweise der Fall sein, wenn zur Erhöhung des Abstands der einzelnen Saatreihen jede zweite Dosiereinheit 3 außer Betrieb gesetzt werden soll oder wenn gezielt einzelne Saatreihen zur Bildung einer Fahrspur für ein die Nutzfläche später bearbeitendes weiteres Nutzfahrzeug frei bleiben sollen. Um das Dosierrad 3.1 einer Dosiereinheit 3 hierzu antriebsfrei zu schalten, muss die Dosierwelle 3.2 der entsprechenden Dosiereinheit 3 von der Antriebswelle 5 entkoppelt werden. Zu diesem Zweck ist dem in Fig. 6 bis 9 gezeigten Koppelelement 7 eine Kupplung 9 zugeordnet, welche das Koppelelement 7 von der Antriebswelle 5 entkoppeln kann. Durch Betätigung der Kupplung 9 wird das ansonsten drehfest an der Antriebswelle 5 angeordnete Koppelelement 7 derart entkoppelt, dass es frei gegenüber der Antriebswelle 5 drehen kann. Hierdurch werden Drehmomente von der Antriebswelle 5 nicht mehr auf das Koppelelement 7 übertragen, so dass das Koppelement 7 weder das Antriebselement 3.3 noch die Dosierwelle 3.2 in dieser entkoppelten Stellung antreibt.

Im gezeigten Ausführungsbeispiel ist die Kupplung 9 als Bestandteil des Koppelelements 7 ausgestaltet, was eine einfache gemeinsame Montage des Koppelelements 7 und der Kupplung 9 auf der Antriebswelle 5 ermöglicht.

Um die Kupplung 9 betätigen und das Koppelelement 7 von der Antriebswelle 5 entkoppeln zu können, weist die Kupplung entlang ihres Umfangs radial hervorstehende Nocken 9.1 auf. Über diese Nocken 9.1 kann die Kupplung 9 in ihrer absoluten Lage relativ zu der sich drehenden Antriebswelle 5 festgelegt und so betätigt werden. Durch die beim weiteren Drehen der Antriebswelle 5 erfolgende relative Verdrehung der Kupplung 9 gegenüber der Antriebswelle 5 löst die Kupplung 9 aus und entkoppelt das Koppelelement 7 von der Antriebswelle 5. Wird die Kupplung 9 über ihre Nocken 9.1 wieder freigegeben, so koppelt diese wieder das Koppelelement 7 mit der Antriebswelle 5. Die Dosierwelle 3.2 und das Dosierrad 3.1 werden dann wieder von der Antriebswelle 5 angetrieben.

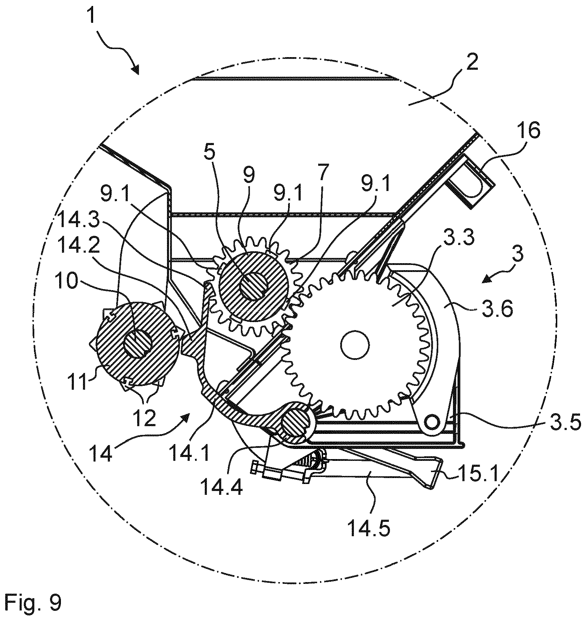

Um diese Betätigung der Kupplung 9 zentral gesteuert durchführen zu können, weist die Sämaschine 1 eine Schaltwelle 10 auf, mit welcher einzelne Dosierwellen 3.2 der Dosiereinheiten 3 durch Betätigung der jeweiligen Kupplung 9 antriebsfrei geschaltet werden können. Diese Schaltwelle 10 ist beispielsweise in Fig. 3 und Fig. 9 nähergehend gezeigt. Versehen ist diese Schaltwelle 10 mit Schalträdern 11, welche nach Art von Nockenrädern ausgestaltet sind. Jedes dieser Schalträder 11 weist entlang seines Umfangs mehrere Schaltpositionen 13 auf, welche wahlweise mit einem Nocken 12 bestückt werden können.

Diese Schalträder 11 sind derart auf der Schaltwelle 10 angeordnet, dass ihre Schaltpositionen 13 entlang der Schaltwelle 10 miteinander fluchten. In einer Drehposition der Schaltwelle 10 sind somit sämtliche an ihr angeordneten Schalträder gleich ausgerichtet. Die Schaltwelle 10 kann dabei eine Anzahl von Drehpositionen zur Antriebsfreischaltung von Dosierwellen 3.2 anfahren, welche der Anzahl der Schaltpositionen 13 der verwendeten Schalträder 11 entspricht. Abhängig davon, ob die einen T-förmigen Querschnitt aufweisende Schaltposition 13 mit einem komplementär ausgestalteten Nocken 12 bestückt ist oder nicht, kann das Schaltrad 11 in dieser Drehposition die Antriebsfreischaltung des ihr zugeordneten Dosierrads 3.1 bewirken oder nicht. Durch das Bestücken oder das Auslassen des Bestückens der Schaltposition 13 mit einem Nocken 12 kann das Schaltrad 11 mechanisch programmiert werden.

Um eine möglichst große Flexibilität der Sämaschine 1 zu ermöglichen, ist jeder Dosierwelle 3.2 sowohl ein Schaltrad 11 als auch eine Kupplung 9 zugeordnet.

Um das in Fahrtrichtung F vor und unterhalb der Antriebswelle 5 und der Kupplung 9 liegende Schaltrad 11 mit der Kupplung 9 zu verbinden, weist die Sämaschine 1 Betätigungsmittel 14 auf. Dieses von den Schalträdern 11 zur Betätigung der Kupplung 9 ansteuerbare Betätigungsmittel 14 ist nach Art eines gebogenen Arms drehfest an der Lagerachse 18 angeordnet. Ausgehend von der die Lagerachse 18 aufnehmenden Aufnahme 14.4 weist das Betätigungsmittel 14 einen um im Wesentlichen 90° in Richtung der Antriebswelle 5 gekrümmten Körper 14.1 auf. In Richtung seines freien Endes verjüngt sich dieser Körper 14.1 relativ zu seinem an der Aufnahme 14.4 angrenzenden Ende. Durch diese geringere Dicke des Körpers 14.1 an seinem freien Ende ist das Betätigungsmittel 14 in sich flexibel, so dass es zur Betätigung der Kupplung 9 elastisch verformt werden kann.

An seinem freien Ende weist das Betätigungsmittel 14 eine Rastnase 14.3 auf, welche zur Betätigung der Kupplung 9 mit den Nocken 9.1 verrasten kann.

Um das Betätigungsmittel 14 von seiner Ruhestellung, in welcher die Rastnase 14.3 nicht in Kontakt mit der Kupplung 9 oder den Nocken 9.1 kommt, in eine Raststellung zu überführen, in welcher die Rastnase 14.3 zur Betätigung der Kupplung 9 mit den Nocken 9.1 verrastet, ist in dem Bereich des Körpers 14.1 mit geringerer Dicke ein Ansteuervorsprung 14.2 vorgesehen. Der Ansteuervorsprung 14.2 ragt vom Körper 14.1 in Richtung der Schaltwelle 10 und insbesondere des ihm zugeordneten Schaltrads 11. Dieser Ansteuervorsprung 14.2 erstreckt sich bis derart kurz vor dem Schaltrad 11, dass der Ansteuervorsprung 14.2 das Schaltrad 11 selbst nicht berührt, sofern jedoch die an den Ansteuervorsprung 14.2 angrenzende Schaltposition 13 mit einem Nocken 12 bestückt ist, dieser Nocken 12 gegen den Ansteuervorsprung 14.2 drückt. Durch den Nocken 12 kann das Betätigungsmittel 14 derart in Richtung der Kupplung 9 gedrückt werden, dass die Rastnase 14.3 mit den Nocken 9.1 der Kupplung 9 verrasten kann. Die Schalträder 11 der Schaltwelle 10 drücken dabei ähnlich einer mechanischen Spieluhr auf die ihnen zugeordneten Betätigungsmittel 14.

Wie in Fig. 3 und Fig. 8 zu erkennen ist, schließt sich an die Aufnahme 14.4 des Betätigungsmittels 14 nicht nur der elastisch verformbare Körper 14.1 an, sondern auch ein Griffstück 14.5. Dieses Griffstück 14.5 ist entgegen der Fahrtrichtung F unter der Lagerachse 18 hindurchgeführt und ermöglicht es, von der entgegen der Fahrtrichtung F liegenden Rückseite der Sämaschine 1 auf das Betätigungsmittel 14 einzuwirken. Dabei ist das Betätigungsmittel 14 in seiner axialen Position auf der Lagerachse 18 veränderbar gelagert.

In den in den Fig. 7 und 8 dargestellten Ansichten wird das Betätigungsmittel 14 in seiner axialen Position durch das Distanzstück 15 fixiert, so dass es seine Position entlang der Lagerachse 18 nicht verändern kann. Auch dieses Distanzstück 15 weist eine die Lagerachse 18 umschließende Aufnahme 15.2 sowie ein sich entgegen der Fahrtrichtung F erstreckendes Griffstück 15.1 auf. Zur Änderung der axialen Position des Betätigungsmittels 14 entlang der Lagerachse 18 kann das Griffstück 15.1 von der Rückseite der Sämaschine 1 aus manuell am Griffstück 15.1 gepackt und von der Lagerachse 18 abgezogen werden.

Über das Griffstück 14.5 kann das Betätigungsmittel 14 dann entlang der Lagerachse 18 in die ursprünglich vom Distanzstück 15 eingenommene Position verschoben werden. Das Distanzstück 15 kann anschließend manuell an die ursprüngliche Position des Betätigungsmittels 14 gesteckt werden. Auch in dieser Position ist das Betätigungsmittel 14 durch das Distanzstück 15 so vor einem Verrutschen entlang der Lagerachse geschützt.

Durch dieses Vertauschen des Betätigungsmittels 14 und des Distanzstücks 15 entlang der Lagerachse 18 wird das Betätigungsmittel 14 derart in seiner Position relativ zum Schaltrad 11 verändert, dass auch die mit Nocken 12 bestückten Schaltpositionen 13 des Schaltrads 11 nicht mehr in Kontakt mit dem Ansteuervorsprung 14.2 gelangen können. Durch die axiale Positionsänderung wird das Betätigungsmittel 14 somit derart seitlich versetzt, dass die Betätigbarkeit der diesem Betätigungsmittel 14 zugeordnete Kupplung 9 aufgehoben wird. Das in seiner Axialposition veränderbare Betätigungsmittel 14 gestattet es somit wahlweise, die Betätigbarkeit der ihr zugeordneten Kupplung 9 für die Dauer aufzuheben, in welcher das Betätigungsmittel 14 in seiner mit dem Distanzstück 15 vertauschten Position angeordnet ist. Durch diesen manuellen Eingriff lassen sich einzelne Dosierwellen 3.2 von der drehpositionsabhängigen Antriebsfreischaltung über die ihnen zugeordneten Schalträder 11 ausnehmen, während die übrigen Dosierwellen 3.2 weiterhin über die ihnen zugeordneten Schalträder 11 abhängig von deren Drehpositionen mittels der Schaltwelle 10 antriebsfrei geschaltet werden können.

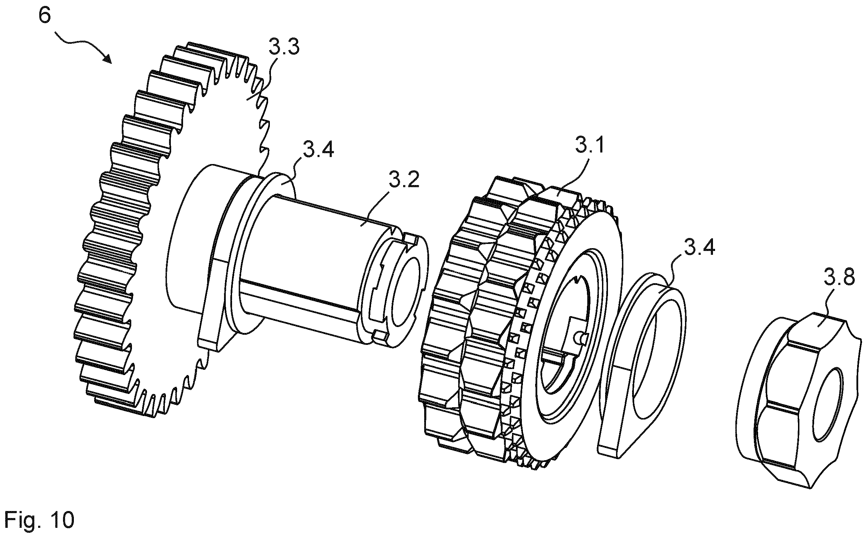

In Fig. 10 ist eine Austauscheinheit 6 dargestellt, welche das Dosierrad 3.1, die Dosierwelle 3.2 sowie das Antriebselement 3.3 einer Dosiereinheit 3 umfasst. Zusätzlich gehören zu dieser Austauscheinheit 6 zwei Lagerelemente 3.4 zur drehbaren Lagerung der Dosierwelle 3.2 an dem Dosiergehäuse 3.5 sowie ein Fixierelement 3.8 zur axialen Fixierung der beiden Lagerelemente 3.4 sowie des Dosierrads 3.1 auf der Dosierwelle 3.2. Dieses axiale Fixierelement 3.8 ist in den Fig. 6 und 7 zur Ermöglichung einer besseren Sicht auf das tropfenförmige Lagerelement nicht dargestellt.

Die Austauscheinheit 6 ermöglicht es, das Dosierrad 3.1 zusammen mit der Dosierwelle 3.2 und dem Antriebselement 3.3 als eine gemeinsame Einheit aus dem Dosiergehäuse 3.5 zu entnehmen, zu Wartungszwecken zu demontieren oder als ganze Einheit auszutauschen. Hierzu muss lediglich der Gehäusedeckel 3.6 umgeklappt werden, so dass die gesamte Austauscheinheit 6 aus dem Dosiergehäuse 3.5 entnommen werden kann. Eine Demontage benachbarter Dosiereinheiten 3 ist aber nicht erforderlich, da jede Dosiereinheit 3 über eine eigene Dosierwelle 3.2 verfügt, welche voneinander getrennt sind. Aufgrund der Lage der Antriebswelle 5 relativ zur Dosierwelle 3.2 ist es bei einem solchen Austausch der gesamten Austauscheinheit 6 auch nicht erforderlich, die Antriebswelle 5 ganz oder auch nur teilweise zu demontieren.

Die axiale Fixierung der Lagerelemente 3.4 sowie des Dosierrads 3.1 auf der Dosierwelle 3.2 erfolgt, wie bereits obenstehend beschrieben, über das axiale Fixierelement 3.8, welches nach Art einer Mutter mit Bajonettverschluss ausgestaltet ist und an der Dosierwelle 3.2 arretiert werden kann.

Um das Dosierrad 3.1 zu dem drehfest mit der Dosierwelle 3.2 zu verbinden, weist die Dosierwelle 3.2 mehrere in Längsrichtung verlaufende, nach innen gerichtete Nuten auf, in welche komplementäre, nach radial innen gerichtete Vorsprünge des Dosierrads 3.1 eingreifen können. Die im Wesentlichen dreieckförmigen Nuten wirken somit mit den dreieckförmigen Vorsprüngen des Dosierrads 3.1 zur drehfesten Fixierung des Dosierrads 3.1 an der Dosierwelle 3.2 zusammen.

Das Antriebselement 3.3 ist im gezeigten Ausführungsbeispiel einstückig mit der Dosierwelle 3.2 ausgestaltet, so dass dieses nicht zusätzlich an dieser drehfest angeordnet werden muss. Alternativ kann das Antriebselement 3.3 ähnlich wie das Fixierelement 3.8 als gesondertes Bauteil bajonettverschlussartig mit der Dosierwelle 3.2 drehfest verbunden werden.

Mithilfe der vorstehend beschriebenen Sämaschine 1 können der Verschleiß und das Auftreten von Unterbrechungen während der Aussaat erheblich reduziert werden.

### Bezugszeichen

- 1: Sämaschine
- 2: Vorratsbehälter
- 2.1: Saatgutreservoir
- 2.2: Abdeckelement
- 2.3: Einhausung
- 3: Dosiereinheit
- 3.1: Dosierrad
- 3.2: Dosierwelle
- 3.3: Antriebselement
- 3.4: Lagerelement
- 3.5: Dosiergehäusen
- 3.6: Gehäusedeckel
- 3.7: Bodenklappe
- 3.8: Fixierelement
- 3.9: Aufnahmeöffnung
- 4: Säeinheit
- 4.1: Säschar
- 5: Antriebswelle
- 5.1: Antriebsbereich
- 5.2: Rührbereich
- 6: Austauscheinheit
- 7: Koppelelement
- 8: Rührelement
- 9: Kupplung
- 9.1: Nocken
- 10: Schaltwelle
- 11: Schaltrad
- 12: Nocken
- 13: Schaltposition
- 14: Betätigungsmittel
- 14.1: Körper
- 14.2: Ansteuervorsprung
- 14.3: Rastnase
- 14.4: Aufnahme
- 14.5: Griffstück
- 15: Distanzstück
- 15.1: Griffstück
- 15.2: Aufnahme
- 16: Zulaufschieber
- 17: Hebel
- 18: Lagerachse
- 19: Feder
- 20: Wellenlager
- 21: Zugmaschine
- F: Fahrtrichtung
- N: Nutzfläche

## Patentansprüche

1. Sämaschine, welche zum Ausbringen von Saatgut auf einer landwirtschaftlichen Nutzfläche (N) entlang einer Fahrtrichtung (F) bewegbar ist, mit
- einem Vorratsbehälter (2) zur Aufnahme des Saatguts,
- mehreren nebeneinander angeordneten Dosiereinheiten (3), welche jeweils mindestens ein drehbar gelagertes Dosierrad (3.1) zur Dosierung des Saatguts und eine Dosierwelle (3.2) zum Antrieb des Dosierrads (3.1) aufweisen, und
- einer Antriebswelle (5) zum Antrieb der Dosierwellen (3.2),
wobei die Antriebswelle (5) in Fahrtrichtung (F) vor den Dosierrädern (3.1) angeordnet ist,
**dadurch gekennzeichnet, dass** die Antriebswelle (5) den Vorratsbehälter (2) durchstoßend angeordnet ist.

2. Sämaschine nach Anspruch 1, **dadurch gekennzeichnet, dass** die Antriebswelle (5) oberhalb der Dosierwellen (3.2) angeordnet ist.

3. Sämaschine nach einem der Ansprüche 1 oder 2, **dadurch gekennzeichnet, dass** jede der mehreren nebeneinander angeordneten Dosiereinheiten (3) ein Antriebselement (3.3) zum Antrieb der Dosierwellen (3.2) aufweist.

4. Sämaschine nach einem der vorhergehenden Ansprüche, **dadurch gekennzeichnet, dass** die Antriebswelle (5) teilweise im mit Saatgut füllbaren Saatgutreservoir (2.1) des Vorratsbehälters (2) angeordnet ist.

5. Sämaschine nach einem der vorhergehenden Ansprüche, **dadurch gekennzeichnet, dass** die Antriebswelle (5), insbesondere außerhalb des Vorratsbehälters (2) angeordnete, Antriebsbereiche (5.1) zum Antrieb der Dosierwellen (3.2) und, insbesondere im Vorratsbehälter (2) angeordnete, Rührbereiche (5.2) zum Durchrühren des Saatguts aufweist.

6. Sämaschine nach Anspruch 5, **dadurch gekennzeichnet, dass** die Antriebsbereiche (5.1) und die Rührbereiche (5.2) alternierend entlang der Antriebswelle (5) angeordnet sind.

7. Sämaschine nach einem der vorhergehenden Ansprüche, **dadurch gekennzeichnet, dass** die Antriebswelle (5), insbesondere in den Antriebsbereichen (5.1) angeordnete, Koppelelemente (7) zur kraftschlüssigen Kopplung der Antriebswelle (5) mit den Dosierwellen (3.2) aufweist.

8. Sämaschine nach Anspruch 7, **dadurch gekennzeichnet, dass** den Koppelelementen (7) Kupplungen (9), insbesondere jedem Koppelelement (7) eine Kupplung (9), zur wahlweisen Entkopplung der einem Koppelelement (7) zugeordneten Dosierwelle (3.2) von der Antriebswelle (5) zugeordnet sind.

9. Sämaschine nach einem der vorhergehenden Ansprüche, **gekennzeichnet durch** eine Schaltwelle (10) zur wahlweisen Antriebsfreischaltung einzelner Dosierwellen (3.2).

10. Sämaschine nach Anspruch 9, **dadurch gekennzeichnet, dass** die Schaltwelle (10) mindestens ein Schaltrad (11), insbesondere mehrere Schalträder (11), aufweist, welches eine drehpositionsabhängige Antriebsfreischaltung einer dem Schaltrad (11) zugeordneten Dosierwelle (3.2) ermöglicht.

11. Sämaschine nach Anspruch 10, **dadurch gekennzeichnet, dass** das Schaltrad (11) als Nockenrad, insbesondere mit mehreren wahlweise mit einem Nocken (12) bestückbaren Schaltpositionen (13), ausgestaltet ist.

12. Sämaschine nach einem der Ansprüche 9 bis 11, **gekennzeichnet durch** Betätigungsmittel (14), welche von der Schaltwelle (10), insbesondere von den Schalträdern (11), zur Betätigung der Kupplungen (9) ansteuerbar sind.

13. Sämaschine nach Anspruch 12, **dadurch gekennzeichnet, dass** die Betätigungsmittel (14) zur wahlweisen Aufhebung der Betätigbarkeit einzelner Kupplungen (9) in ihren axialen Positionen veränderbar auf einer Lagerachse (18) gelagert, insbesondere axial verschiebbar, sind.

14. Sämaschine nach einem der vorhergehenden Ansprüche, **dadurch gekennzeichnet, dass** die Dosierräder (3.1) der Dosiereinheiten (3) ohne Demontage der Antriebswelle (5) und/oder benachbarter Dosiereinheiten (3) austauschbar sind.

15. Sämaschine nach einem der vorhergehenden Ansprüche, **dadurch gekennzeichnet, dass** das Dosierrad (3.1), die Dosierwelle (3.2) und das Antriebselement (3.3) einer Dosiereinheit (3) Teile einer aus einem Dosiergehäuse (3.5) der Dosiereinheit (3) entnehmbaren Austauscheinheit (6) sind.

## Claims

1. Seed drill which is movable in a direction of travel (F) in order to spread seed over agricultural land (N), comprising
- a hopper (2) for receiving the seed,
- a plurality of metering units (3) arranged side by side, which each comprise at least one rotatably mounted metering wheel (3.1) for metering the seed and a metering shaft (3.2) for driving the metering wheel (3.1), and
- a drive shaft (5) for driving the metering shafts (3.2),
the drive shaft (5) being arranged in front of the metering wheels (3.1) in the direction of travel (F),
**characterized in that** the drive shaft (5) is arranged so as to penetrate the hopper (2).

2. Seed drill according to claim 1, **characterized in that** the drive shaft (5) is arranged above the metering shafts (3.2).

3. Seed drill according to either claim 1 or claim 2, **characterized in that** each of the plurality of metering units (3) arranged side by side comprises a drive element (3.3) for driving the metering shafts (3.2).

4. Seed drill according to any of the preceding claims, **characterized in that** the drive shaft (5) is arranged partially in the seed reservoir (2.1) of the hopper (2), which reservoir can be filled with seed.

5. Seed drill according to any of the preceding claims, **characterized in that** the drive shaft (5) comprises drive regions (5.1) for driving the metering shafts (3.2), which drive regions are arranged in particular outside the hopper (2), and stirring regions (5.2) for stirring the seed, which stirring regions are arranged in particular in the hopper (2).

6. Seed drill according to claim 5, **characterized in that** the drive regions (5.1) and the stirring regions (5.2) are arranged alternately along the drive shaft (5).

7. Seed drill according to any of the preceding claims, **characterized in that** the drive shaft (5) comprises coupling elements (7), arranged in particular in the drive regions (5.1), for frictionally coupling the drive shaft (5) to the metering shafts (3.2).

8. Seed drill according to claim 7, **characterized in that** clutches (9) are associated with the coupling elements (7), in particular one clutch (9) with each coupling element (7), for optionally decoupling the metering shaft (3.2) associated with a coupling element (7) from the drive shaft (5).

9. Seed drill according to any of the preceding claims, **characterized by** a switching shaft (10) for optionally disconnecting the drive of individual metering shafts (3.2).

10. Seed drill according to claim 9, **characterized in that** the switching shaft (10) comprises at least one switching wheel (11), in particular a plurality of switching wheels (11), which allows rotation position-dependent disconnection of the drive of a metering shaft (3.2) associated with the switching wheel (11).

11. Seed drill according to claim 10, **characterized in that** the switching wheel (11) is designed as a cam wheel, in particular comprising a plurality of switching positions (13) that can optionally be equipped with a cam (12).

12. Seed drill according to any of claims 9 to 11, **characterized by** actuating means (14) which can be controlled by the switching shaft (10), in particular by the switching wheels (11), in order to actuate the clutches (9).

13. Seed drill according to claim 12, **characterized in that** the actuating means (14) for optionally disabling the actuatability of individual clutches (9) are mounted on a bearing pin (18), in particular axially displaceably, so as to allow changes in the axial positions of the actuating means.

14. Seed drill according to any of the preceding claims, **characterized in that** the metering wheels (3.1) of the metering units (3) can be replaced without dismounting the drive shaft (5) and/or adjacent metering units (3).

15. Seed drill according to any of the preceding claims, **characterized in that** the metering wheel (3.1), the metering shaft (3.2) and the drive element (3.3) of a metering unit (3) are parts of a replaceable unit (6) that can be removed from a metering housing (3.5) of the metering unit (3).

## Revendications

1. Semoir, lequel peut être déplacé le long d'un sens de déplacement (F) pour distribuer des semences sur une surface agricole utile (N), comportant
- un récipient de stockage (2) destiné à recevoir les semences,
- plusieurs unités de dosage (3) disposées les unes à côté des autres, lesquelles présentent respectivement au moins une roue de dosage (3.1) montée de manière à pouvoir tourner pour le dosage des semences et un arbre de dosage (3.2) pour l'entraînement de la roue de dosage (3.1), et
- un arbre d'entraînement (5) pour l'entraînement des arbres de dosage (3.2),
dans lequel l'arbre d'entraînement (5) est disposé avant les roues de dosage (3.1) dans le sens de déplacement (F),
**caractérisé en ce que** l'arbre d'entraînement (5) est disposé de manière à traverser le récipient de stockage (2).

2. Semoir selon la revendication 1, **caractérisé en ce que** l'arbre d'entraînement (5) est disposé au-dessus des arbres de dosage (3.2).

3. Semoir selon l'une des revendications 1 ou 2, **caractérisé en ce que** chacune parmi les unités de dosage (3) disposées les unes à côté des autres présente un élément d'entraînement (3.3) pour l'entraînement des arbres de dosage (3.2).

4. Semoir selon l'une des revendications précédentes, **caractérisé en ce que** l'arbre d'entraînement (5) est disposé en partie dans le réservoir pour semences (2.1), lequel peut être rempli de semences, du récipient de stockage (2).

5. Semoir selon l'une des revendications précédentes, **caractérisé en ce que** l'arbre d'entraînement (5) présente des zones d'entraînement (5.1), disposées en particulier à l'extérieur du récipient de stockage (2), pour l'entraînement des arbres de dosage (3.2), et des zones d'agitation (5.2), disposées en particulier dans le récipient de stockage (2), pour agiter les semences.

6. Semoir selon la revendication 5, **caractérisé en ce que** les zones d'entraînement (5.1) et les zones d'agitation (5.2) sont disposées en alternance le long de l'arbre d'entraînement (5).

7. Semoir selon l'une des revendications précédentes, **caractérisé en ce que** l'arbre d'entraînement (5) présente des éléments d'accouplement (7), disposés en particulier dans les zones d'entraînement (5.1), pour l'accouplement à force de l'arbre d'entraînement (5) aux arbres de dosage (3.2).

8. Semoir selon la revendication 7, **caractérisé en ce que** des accouplements (9) sont associés aux éléments d'accouplement (7), en particulier un accouplement (9) est associé à chaque élément d'accouplement (7), pour désaccoupler au choix l'arbre de dosage (3.2) associé à un élément d'accouplement (7) de l'arbre d'entraînement (5).

9. Semoir selon l'une des revendications précédentes, **caractérisé par** un arbre de commutation (10) pour activer au choix l'entraînement de différents arbres de dosage (3.2).

10. Semoir selon la revendication 9, **caractérisé en ce que** l'arbre de commutation (10) présente au moins une roue de commutation (11), en particulier plusieurs roues de commutation (11), qui permettent une activation de l'entraînement, en fonction de la position de rotation, d'un arbre de dosage (3.2) associé à la roue de commutation (11).

11. Semoir selon la revendication 10, **caractérisé en ce que** la roue de commutation (11) est conçue comme une roue à cames, en particulier comportant plusieurs positions de commutation (13) pouvant être équipées au choix d'une came (12).

12. Semoir selon l'une des revendications 9 à 11, **caractérisé par** des moyens d'actionnement (14) qui peuvent être commandés par l'arbre de commutation (10), en particulier par les roues de commutation (11), pour l'actionnement des accouplements (9).

13. Semoir selon la revendication 12, **caractérisé en ce que** les moyens d'actionnement (14) sont montés, en particulier peuvent coulisser axialement, de manière à pouvoir être modifiés en ce qui concerne leurs positions axiales sur un axe de palier (18) pour supprimer au choix la possibilité d'actionnement de différents accouplements (9).

14. Semoir selon l'une des revendications précédentes, **caractérisé en ce que** les roues de dosage (3.1) des unités de dosage (3) peuvent être remplacées sans démontage de l'arbre d'entraînement (5) et/ou d'unités de dosage (3) voisines.

15. Semoir selon l'une des revendications précédentes, **caractérisé en ce que** la roue de dosage (3.1), l'arbre de dosage (3.2) et l'élément d'entraînement (3.3) d'une unité de dosage (3) sont des parties d'une unité de remplacement (6) pouvant être retirée d'un boîtier de dosage (3.5) de l'unité de dosage (3).
